# EUROPÄISCHE PATENTSCHRIFT

(11) **EP 1 593 700 B1**
(45) Veröffentlichungstag und Bekanntmachung des Hinweises auf die Patenterteilung: **02.11.2006**
(21) Anmeldenummer: 05008961.4
(22) Anmeldetag: 23.04.2005
(51) Int. Cl.: C08G 18/79, C08G 18/32, C08G 18/42, C08G 18/48, C08G 18/50, C08G 18/64, C08G 18/83, B01F 17/00, C09D 17/00, C09D 175/04

(54) **Als Dispergiermittel und Dispersionsstabilisatoren geeignete Additionsverbindungen**
Addition compositions suitable as dispersants and dispersion stabilizers
Composés d'addition utilisables comme dispersants et stabilisateurs de dispersion

(30) Priorität: 07.05.2004 DE 102004022753
(43) Veröffentlichungstag der Anmeldung: 09.11.2005
(73) Patentinhaber: Byk-Chemie GmbH, 46483 Wesel (DE)
(72) Erfinder: Pritschins, Wolfgang, Dr., 46487 Wesel (DE); Krappe, Udo, Dr., 46446 Emmerich (DE); Haubennestel, Karlheinz, 46487 Wesel (DE); Esser, Andrea, 48485 Wesel (DE)
(74) Vertreter: Leifert & Steffan

(56) Entgegenhaltungen:
- EP-A- 0 154 678
- EP-A- 0 191 915
- EP-A- 0 292 702
- EP-A- 0 438 836
- EP-A- 0 826 753

## Beschreibung

Die vorliegende Erfindung betrifft als Dispergiermittel und als Dispersionsstabilisatoren geeignete Additionsverbindungen und deren Salze. Die Erfindung betrifft weiterhin Verfahren zur Herstellung dieser Additionsverbindungen, deren Verwendung als Dispergiermittel und Dispersionsstabilisatoren für organische und anorganische Pigmente sowie Füllstoffe in organischen und wäßrigen Systemen und in flüssige Systeme einzuarbeitende pulver- oder faserförmige Feststoffe, die mit solchen Dispergiermitteln beschichtet sind.

Dispergiermittel eignen sich im Allgemeinen zur Stabilisierung von Feststoffteilchen in Bindemitteln, Lacken, Pigmentpasten, Kunststoffen und Kunststoffmischungen, zur Reduktion der Viskosität solcher Systeme sowie zur Verbesserung der Fliesseigenschaften.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Bei solchen Dispergiermitteln handelt es sich um oberflächenaktive Stoffe, anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, daß es auch nach vollständiger Deflockulierung der Feststoffagglomerate in Primärteilchen, nach dem Dispergierprozeß zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie: Viskositätsanstieg in flüssigen Systemen, Farbtondrift und Glanzverluste in Lacken und Beschichtungen sowie der Verringerung der mechanischen Festigkeit in Kunststoffen.

Eine Vielzahl verschiedener Substanzen werden heute als Dispergiermittel für Pigmente und Füllstoffe verwendet. Neben einfachen, niedermolekularen Verbindungen wie z.B. Lecithin, Fettsäuren und deren Salzen und Alkylphenolethoxylaten werden auch komplexe Strukturen als Dispergiermittel eingesetzt. Hier sind es speziell amino- und amidfunktionelle Systeme, die breite Verwendung innerhalb der Dispergiermittel einnehmen. In EP 158 406 und EP 208 041 werden z.B. amino- und amidfunktionelle Poly- und Oligocopolymere auf der Basis von Polyaminen und Polycaprolactonen zur Dispergierung von Pigmenten eingesetzt, bei denen alle reaktiven Aminogruppen in Amidgruppen umgewandelt sind.

Diese Produkte stellen aber komplexe und schlecht reproduzierbare Reaktionsgemische dar und weisen sehr schlechte Löslichkeiten in Lösemitteln und unzulängliche Verträglichkeiten mit Bindemitteln und anderen Harzen auf. Die EP 0 713 894 beschreibt die Verwendung von aminofunktionellen Polylactonen für Überzüge und Druckfarben. Weiterhin werden aminfunktionelle Polyacrylate (EP 0 311 157) zur Stabilisierung von organischen und anorganischen Pigmenten eingesetzt.

Polymere Dispergiermittel auf der Basis von Polyisocyanaten sind z. B. in der EP 0 154 678, der EP 318 999 und der EP 0 438 836 beschrieben. Diese Produkte werden durch Addition von Monohydroxyverbindungen, diisocyanatfunktionellen Verbindungen und Verbindungen mit einer tertiären Aminogruppe an die vorliegenden NCO-Gruppen von Isocyanurat-, Biuret-, Urethan- und/oder Allophanatgruppen aufweisenden Polyisocyanaten hergestellt. Sie stellen aber aufgrund von vielen möglichen Nebenreaktionen bei ihrer Herstellung sehr komplexe und wenig definierte Reaktionsmischungen dar, mit den sich daraus ergebenden Nachteilen, wie sehr eingeschränkten Verträglichkeiten und schlechten Löslichkeiten. Insbesondere stellt die Umsetzung der NCO-Gruppen mit aminhaltigen Verbindungen einen schlecht zu beherrschenden Reaktionsschritt dar, der häufig zu unerwünschten Vernetzungen und zu Gelbildungen führt, da diese Vernetzungsreaktionen durch Amine, insbesondere tertiäre Amine, katalysiert werden. Daher lassen sich diese Reaktionen nur in stark verdünnten Lösungen durchführen und die Endprodukte weisen sehr niedrige Festkörpergehalte von in der Regel unter 50% und in vielen Fällen sogar nur von 20-30% auf. Die dadurch über diese Produkte eingebrachten großen Lösemittelmengen führen in modernen Beschichtungssystemen aber zu erheblichen Problemen, da im Zuge der fortschreitenden Bemühungen umweltverträgliche Systeme zu erzeugen, die Notwendigkeit besteht, die Lösungsmittelmenge soweit wie möglich zu senken (z.B. bei Pigmentkonzentraten, high-solid und ultra-high-solid Lacken), oder sogar ganz auf organische Lösungsmittel zu verzichten.

Auch ist das Adsorptionsvermögen der dort vorgestellten Additionsverbindungen von Monoaminen auf die Feststoffoberflächen in vielen Fällen nicht ausreichend für eine hinreichende Stabilisierung der Feststoffe. Die Auswahl der zur Herstellung einsetzbaren Amine ist auf Monoamine begrenzt, da es bei Einsatz von Polyaminen zu nicht handhabbaren Produkten aufgrund von Vernetzungen und Gelierungen kommt. Die nach diesen Verfahren anfallenden Zwischenprodukte sind aufgrund der stets noch vorhandenen reaktiven NCO-Gruppen nicht über längere Zeit lagerfähig und müssen in der Regel sofort weiter umgesetzt werden, so daß eine wirtschaftlich wünschenswerte Lagerhaltung von Vorprodukten nicht möglich ist.

Die oben vorgestellten Dispergiermittel stellen oft nur Teillösungen für diese Probleme dar. Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt.

Der vorliegenden Erfindung liegt daher die Aufgabe zugrunde, die zuvor beschriebenen Nachteile bekannter Dispergiermittel zu beseitigen, d.h. Dispergieradditive zu entwickeln, die bei guter Stabilisierung von Pigmenten oder Füllstoffen die Mahlgutviskosität der Lacke, Pasten oder Kunststoffformulierungen so weit senken, daß eine Verarbeitung bei hohem Füllgrad möglich ist. Gleichzeitig muß speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, daß die verwendeten erfindungsgemäßen Dispergieradditive eine flockulationsfreie Mischbarkeit der Pasten, bzw. der mit diesen Pasten hergestellten Bindemittel, untereinander ermöglichen.

Überraschenderweise hat es sich gezeigt, daß eine deutliche Verbesserung in der Dispergierung und Stabilisierung von Pigmenten oder Füllstoffteilchen in Bindemitteln, Pigmentpasten oder Kunststoffformulierungen erreicht werden kann, wenn die nachfolgend beschriebenen Additionsverbindungen eingesetzt werden, die aus uretdiongruppenhaltigen Polyisocyanaten hergestellt werden.

Weiterhin sind diese Dispergiermittel überraschend breit verträglich und können sowohl in polaren wie auch in unpolaren Bindemittelsystemen eingesetzt werden. Sie senken die Viskosität des Mahlgutes während der Dispergierung stark und erlauben es daher Formulierungen mit hohem Feststoffanteil herzustellen.

Es wurde überraschenderweise gefunden, daß die Aufgabenstellung gelöst wurde durch die Bereitstellung von Additionsverbindungen , welche erhältlich sind durch die Umsetzung von
a) einem oder mehreren uretdiongruppenhaltigen Polyisocyanaten mit
b) einer oder mehreren Verbindungen der Formel (I)

   Y-(XH)ₙ (I)

   wobei
   XH für eine gegenüber Isocyanaten reaktive Gruppe steht und
   Y für eine nicht gegenüber Isocyanaten reaktive, monomere oder polymere Gruppe steht, die eine oder mehrere aliphatische, cycloaliphatische, araliphatische und/oder aromatische Gruppen umfaßt,
   wobei Y eine zahlenmittlere Molmasse kleiner 20000 g/mol besitzt und n für 1, 2 oder 3 steht und
   wobei für mindestens 50 Mol-% der Verbindungen der Formel (I) gilt, daß n = 1 ist,
   unter der Vorgabe, daß im wesentlichen alle freien Isocyanatgruppen der Komponente a) mit den Verbindungen der Formel (I) zu einem Uretdiongruppen enthaltendem Zwischenprodukt umgesetzt werden, wobei anschließend die Uretdiongruppen mit
c) einer oder mehreren Verbindungen der allgemeinen Formel (II)

   Z-NHR (II)

   zur Reaktion gebracht werden,
   worin
   R für Wasserstoff oder eine geradkettige oder verzweigte Alkylgruppe mit
   1 bis 4 Kohlenstoffatomen steht und
   Z einen aliphatischen, cycloaliphatischen und/oder aromatischen basischen Rest darstellt
und gegebenenfalls nach dieser Reaktion im Reaktionsprodukt gegebenenfalls noch vorhandene reaktive Aminogruppen mit gegenüber Aminogruppen reaktiven Verbindungen umgesetzt werden. Die erfindungsgemäßen Additionsverbindungen können auch in Form ihrer Versalzungsprodukte eingesetzt werden.

Die hier beschriebenen erfindungsgemäßen Additionsverbindungen können gezielt und mit weniger Nebenprodukten hergestellt werden als übliche aus dem Stand der Technik, wie z. B. aus der EP 154 678, bekannte Produkte. Die nach Reaktionsschritt a) bis c) hergestellten Zwischenprodukte enthalten keine freien NCO-Gruppen mehr und sind daher beliebig lange lagerstabil, was eine wirtschaftlichere Herstellung ermöglicht. Insbesondere die Umsetzung mit den aminofunktionellen Verbindungen Z-NHR läuft ohne unerwünschte Vernetzungen ab, da hierbei keine freien NCO-Gruppen zugegen sind.

### Uretdiongruppenhaltige Polyisocyanate (Komponente (a))

Für die Herstellung der Additionsverbindungen gemäß der Erfindung werden als uretdionhaltige Polyisocyanate (Komponente a)) die auf diesem technischen Gebiet aus dem Stand der Technik bekannten Verbindungen eingesetzt, wie sie zum Beispiel in der EP 0 795 569 als Ausgangsverbindungen beschrieben werden. Die Herstellung dieser Uretdionpolyisocyanate ist z. B. in DE 1 670 720, EP 45 995, EP 99 976, EP 1 174 428 und der dort zitierten Literatur beschrieben. Bevorzugt besitzen diese Polyisocyanate eine mittlere Funktionalität von 2. Besonders bevorzugt sind dabei cyclische Dimerisierungsprodukte von 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan, Toluylendiisocyanat (TDI), 1-Isocyanato-1-methyl-4(3)isocyanatomethylcyclohexan, Bis-(isocyanatomethyl)-norbornan und 1,3-und 1,4-Bis-(2-isocyanato-prop-2-yl)-benzol (TMXDI) oder Mischungen solcher Diisocyanate. Ganz besonders bevorzugte Ausgangsverbindungen sind dabei Hexamethylendiisocyanat (HDI), Isophorondiisocyanat (IPDI) oder Toluylendiisocyanat (TDI).

Diese Verbindungen stellen Handelsprodukte dar, die häufig nicht in reiner Form vorliegen, sondern die Gemische von Verbindungen ähnlicher Struktur darstellen. Unter mittleren Funktionalität wird verstanden, daß die Handelsprodukte hinsichtlich der Isocyanatgruppen die angegebenen Funktionalität von 2 aufweisen. Beispielsweise bedeutet "Funktionalität von 2", daß ein Molekül im statistischen Mittel 2 freie Isocyanatgruppen enthält. Die mittlere Funktionalität kann man experimentell dadurch ermitteln, daß man das zahlenmittlere Molekulargewicht Mn bestimmt. Außerdem bestimmt man die NCO-Zahl und errechnet daraus das NCO- Äquivalentgewicht. Die mittlere Funktionalität ist der Quotient aus dem zahlenmittleren Molekulargewicht und dem NCO-Äquivalentgewicht.

Die uretdiongruppenhaltigen Polyisocyanate (Komponente a)) werden erfindungsgemäß mit Verbindungen der obigen Formel (I) (Komponente b)) umgesetzt.

### Verbindungen der Formel (I) (Komponente (b))

Die Verbindungen der Formel (I) sind dadurch gekennzeichnet, daß sie eine, zwei oder drei isocyanatreaktive Gruppen XH enthalten. Beispiele für XH sind -OH, -NH₂, -NHR, -SH oder -COOH. Bevorzugt steht XH für -OH, -NH₂ oder -NHR. Besonders bevorzugt sind diese funktionellen Gruppen Hydroxylgruppen, weil diese Verbindungen leicht zugänglich und/oder im Handel erhältlich sind. Auch sind die erhaltenen Reaktionsprodukte gewöhnlich gut in solchen Lösungsmitteln löslich, die beim späteren Einsatz der Dispergiermittel gemäß der Erfindung zur Anwendung kommen.

Als Verbindungen der Formel (I) können aliphatische, cycloaliphatische, araliphatische und/oder aromatische Verbindungen eingesetzt werden. Es können auch Gemische solcher Verbindungen eingesetzt werden. Es können geradkettige und verzweigte aliphatische oder araliphatische Verbindungen eingesetzt werden. Diese können gesättigt oder ungesättigt sein. Gesättigte Verbindungen sind bevorzugt. Die Wasserstoffatome können teilweise durch Halogenatome, vorzugsweise durch Fluor und/oder Chlor ersetzt sein.

Beispiele für Verbindungen der Formel (I) sind Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Monophenyldiglykol, Alkylnaphthole und Phenylethanol sowie monohydroxyfunktionelle Polybutadiene, Polypropylene oder Polystyrole. Weitere Beispiele sind unter anderem in der EP-A-154 678 (US-A-4 647 647) beschrieben.

Als Verbindungen der Formel (I) können auch solche eingesetzt werden, die Ester, Ether, Urethan, Carbonat und/oder Siloxan-Gruppen oder Kombinationen dieser Gruppen enthalten. Es kann sich also zum Beispiel um Polyether, Polyester, Polyurethane, Polycarbonate, Polysiloxane oder zum Beispiel gemischte Polyether-Polyester handeln.

Polyester können zum Beispiel durch Umsetzung von Dicarbonsäuren, Dicarbonsäureanhydriden und/oder Dicarbonsäurechloriden mit Diolen und mono-, di-, oder trifunktionellen Startkomponenten hergestellt werden. Die Bildung von Dihydroxypolyestern kann bei Bedarf durch Einsatz entsprechend stöchiometrischer Mengen an Monohydroxyverbindungen, wie sie oben beschrieben wurden, zurückgedrängt werden.

Bevorzugt Polyester der Formel (I) sind solche, die durch Polymerisation einer oder mehrerer, gegebenenfalls alkylsubstituierter, Hydroxycarbonsäuren und/oder deren Lactone wie zum Beispiel Propiolacton, Valerolacton, Caprolacton mittels einer Mono-, Di, -oder Trihydroxy-Startkomponente, wie in EP-A-154 678 (US-A-4 647 647) beschrieben, erhalten werden können. Bevorzugt besitzen diese ein zahlenmittleres Molekulargewicht Mn von 150 bis 5000 g/mol. Die als Startkomponente verwendeten mono-, di, -oder trifunktionellen Alkohole besitzen vorzugsweise 1 bis 30, besser noch 4 bis 14 Kohlenstoffatome. Beispielhaft genannt sind n-Butanol, längerkettige, gesättigte und ungesättigte Alkohole wie Propargylalkohol, Oleylalkohol, Linoleylalkohol, Oxoalkohole, Cyclohexanol, Phenylethanol, Neopentylalkohol, Ethylenglykol, Propylenglykol, Glycerin aber auch fluorierte Alkohole. Es können auch Alkohole der zuvor beschriebenen Art und substituierte und unsubstituierte Phenole durch Alkoxylierung nach bekannten Verfahren mit Ethylenoxid und/oder Propylenoxid in Polyoxyalkylenmonoalkyl-, Polyoxyalkylenmonoaryl-, Polyoxyalkylenmonoaralkyl- und Polyoxyalkylenmonocycloalkylether überführt werden und diese Hydroxypolyether in der vorbeschriebenen Art als Startkomponente für die Lactonpolymerisation eingesetzt werden. Jeweils können auch Gemische von vorgenannten Verbindungen eingesetzt werden. Die Lactonpolymerisation wird nach bekannten Verfahren, initiert durch z. B. p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

Als Verbindungen der Formel (I) können auch Mono-, Di-, oder Trihydroxypolyether eingesetzt werden. Diese können zum Beispiel durch Alkoxylierung von Alkanolen, Cycloalkanolen, Phenolen oder den vorstehend beschriebenen Hydroxypolyestern mit Alkylenoxiden wie Ethylenoxid, Propylenoxid, Butylenoxid, Styroloxid oder Mischungen davon erhalten werden. Im Falle von gemischten Polyethern können diese statistisch oder in Blöcken angeordnet sein. Bevorzugt sind Polyether auf Basis von Ethylenoxid, Propylenoxid und deren Mischungen. Diese Polyether haben zweckmäßig ein zahlenmittleres Molekulargewicht im Bereich von etwa 100 bis 10000 g/mol, bevorzugt von 150 bis 5000 g/mol und besonders bevorzugt von 200 bis 3500 g/mol.

Als Verbindungen der Formel (I) können auch Polyurethane, Polyether-Polyurethane, Polyester-Polyurethane und/oder Polyether-Polyester-Polyurethane eingesetzt werden, die durch Additionsreaktion von Diisocyanaten mit Dihydroxyverbindungen in Anwesenheit von mono-, di-, oder trifunktionellen Startkomponenten erhalten werden können.

Bevorzugte Verbindungen der Formel (I) sind hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind.

Als Diisocyanat können die aus der Polyurethanchemie an sich bekannten aliphatischen, cycloaliphatischen und/oder aromatischen Diisocyanate mit 4 bis 15 Kohlenstoffatomen eingesetzt werden, wie Tetramethylen-Hexamethylen-, Trimethylhexamethylen-, Dodekamethylen-, Isophoron-Toluylen-, Diphenylmethandiisocyanat, Methylenbis(-4-cyclohexylisocyanat) oder 1,4-Cyclohexanbis(methylisocyanat). Als Hydroxyverbindungen zum Aufbau der urethangruppenhaltigen Verbindungen nach Formel (I) werden zweckmässig Diole mit 2 bis 12 Kohlenstoffatomen, Polyoxyalkylenglykole und dihydroxyfunktionelle Polyester mit bevorzugten zahlenmittleren Molekulargewichten von höchstens 2000 g/mol eingesetzt. Als monohydroxyfunktionelle Startkomponente können Alkohole mit bis zu 30 Kohlenstoffatomen, wie sie zur Herstellung der Polyester nach Formel (I) beschrieben sind, aber auch die als Verbindung nach Formel (I) beschriebenen Hydroxypolyester und Hydroxypolyether eingesetzt werden. Die Polyester besitzen vorzugsweise ein zahlenmittleres Molekulargewicht von 300 bis 5000 g/mol und die Polyether von 200 bis 2000 g/mol.

Der Rest Y kann Carbonatgruppen enthalten, wie sie durch Umsetzung gemäß dem Stand der Technik mit offenkettigen und/oder cyclischen Carbonaten erhalten werden. Geeignet sind zum Beispiel mit Carbonaten modifizierte lineare Polyester oder Polycarbonatdiole, wie sie in der Polyurethanherstellung verwendet werden. Beispiele sind beschrieben in US 410 152 9, EP 0358 555, oder WO 02/085507. Geeignete Carbonate sind zum Beispiel aliphatische, cycloaliphatische, araliphatische und/oder aromatische Kohlensäurester wie zum Beispiel Dialkylcarbonate wie Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Der Rest Y kann Heteroatome wie O, S und/oder N enthalten und weitere Gruppen tragen, die sich bei der Bildung des Additionsproduktes inert verhalten. Solche Gruppen sind beispielsweise die Carbonsäureamidgruppe (-NHCO-), nicht aktivierte Doppelbindungen oder Harnstoffgruppierungen (-NHCONH-). Der Anteil dieser Gruppen sollte vorzugsweise unter 50 mol%, bevorzugt unter 5 mol% liegen. Besonders bevorzugt sind Verbindungen, die gar keine dieser Gruppen enthalten.

Die gegebenenfalls vorhandenen Ester-, Ether-, Urethan-, Carbonat- und/oder Siloxan-Gruppen können in Blockstruktur (z.B. Poly(ethylenoxydblock-propylenoxyd-block-ε-caprolacton) oder auch statistisch angeordnet sein.

Als Verbindung der Formel (I) können auch Polyacrylsäureester und/oder Polymethacrylsäureester mit im Mittel bis zu drei NCO-reaktiven Gruppen eingesetzt werden, wie sie durch anionische, kationische oder radikalische Polymerisation von Acrylsäureestern bzw. Methacrylsäureestern erhalten werden. Bevorzugt sind monohydroxyfunktionelle Verbindungen. Monohydroxyfunktionelle Polyacrylsäureester bzw. Polymethacrylsäureester sind solche, die im Mittel eine Hydroxygruppe im Molekül enthalten. Solche Verbindungen sind auf dem vorliegenden Gebiet der Technik bereits zur Herstellung anderer Dispergiermitteln verwendet worden. Derartige Verbindungen sind z. B. in der US-A-4 032 698 oder EP 318 999 beschrieben. Solche Poly(meth)acrylate besitzen vorzugsweise ein zahlenmittleres Molekulargewicht Mn von 300 bis 20000 g/mol, bevorzugter 500 bis 10000. Sie können in Blockstruktur oder auch statistisch angeordnet sein.
Die Carboxylgruppe der monomeren (Meth)acrylate (der Begriff (Meth)acrylate steht für Acrylate und Methacrylate) kann z. B. mit aliphatischen, cycloaliphatischen und/oder aromatischen Alkoholen wie Methanol, Butanol, Cyclohexanol, 2-Ethylhexanol, Lauryl-, Stearyl-, Isobornyl-, Benzylalkohol oder mit Etheralkoholen wie 2-Methoxyethanol, 2-Phenoxyethanol, Tetrahydrofurfurylalkohol, Glycidol oder mit Polyesteralkoholen wie hydroxyfunktionellem Polycaprolacton, oder mit Alkoxypolyalkylenglykolen wie Methoxypolyethylenglykol, Methoxypolypropylenglykol verestert sein. Das zahlenmittlere Molekulargewicht Mn der Veresterungskomponente liegt dabei vorzugsweise unter 2000 g/mol. Zur Herstellung der hydroxyfunktionellen Poly(meth)acrylate können auch Mischungen verschiedener vorstehend beschriebener Monomere eingesetzt werden. Zur Herstellung dieser Poly(meth)acrylate können als Comonomere auch Vinylester wie Vinylacetat, Vinylether wie Vinylethylether, Styrol, Vinyltoluol und/oder Vinylcyclohexan verwendet werden. Die so erhaltenen Copolymere enthalten dabei zweckmäßig nicht mehr als 50 mol% an nicht acrylfunktionellen Comonomeren.

Das zahlenmittlere Molekulargewicht eines Rests Y ist kleiner als 20000 g/mol und liegt vorzugsweise im Bereich von 100 bis 10000 g/mol, bevorzugt im Bereich von 150 bis 5000 g/mol und besonders bevorzugt im Bereich zwischen 200 und 3500 g/mol.

Bevorzugt werden Additionsverbindungen, die mit Gemischen verschiedener Verbindungen der Formel (I) hergestellt werden, da sich diese Produkte in der Regel durch eine besonders breite Verträglichkeit auszeichnen.

Zweckmäßig sollten weniger als 25 mol% der als monofunktionelle Verbindungen (n=1) nach Formel (I) eingesetzten Verbindungen ein zahlenmittleres Molekulargewicht von kleiner 150 g/mol besitzen, bevorzugt weniger als 15 mol% und besonders bevorzugt 0 mol%.
Bei der Umsetzung mit den monofunktionellen Verbindungen der Formel (I) werden 50 bis 100 mol%, bevorzugt 75 bis 100 mol% und besonders bevorzugt 100 mol% der ursprünglich eingesetzten NCO-Gruppen umgesetzt.

Beispiele für di- oder trifunktionelle Verbindungen der Formel (I) (n = 2 oder 3) sind Diole und Triole bzw. Diamine, Dialkanolamine, Monoalkanolamine mit 2 bis 12 Kohlenstoffatomen, Dihydroxydialkylsulfide und Dihydroxysulfone. Beispiele sind Butandiol, Hexandiol, Cyclohexandimethanol, Neopentylglykol, Ethylenglykol, alkylsubstituierte Dialkanolamine, Glycerin, Trimethylolpropan, Fettsäuredialkanolamide, Thiodiglykol, Di(4-Hydroxyphenyl)sulfon, hydroxyfunktionelle Polybutadiene mit einer mittleren Funktionalität von 2 bis 3. Eine bevorzugte Gruppe von Verbindungen der Formel (I) sind Polyoxyalkylenglykole zweckmäßig mit Alkylengruppen mit 2 bis 4, vorzugsweise 2 Kohlenstoffatomen, und vorzugsweise mit zahlenmittleren Molekulargewichten im Bereich von vorzugsweise 200 bis 2000 g/mol und besonders bevorzugt 400 bis 1500 g/mol. Ethoxilate mit 3 Hydroxylgruppen erhält man beispielsweise durch Polymerisation unter Verwendung von trifunktionellen Alkoholen als Starterkomponente. Bevorzugt als Polyoxyalkylenglykole sind Polyethylenglykole.

Als di- oder trifunktionelle Verbindungen der Formel (I) können auch solche eingesetzt werden, die durch Polymerisation eines oder mehrerer Lactone, wie sie bereits erwähnt wurden, mittels Di- oder Trihydroxy-Startkomponenten erhalten werden können. Vorzugsweise haben diese Polyesterpolyole ein zahlenmittleres Molekulargewicht Mn von 800 bis 2000 g/mol. Als Startkomponente ist Butandiol oder Ethylenglykol bevorzugt. Es können aber auch die oben genannten Diole oder Triole als Starterkomponenten in Frage kommen.

Als mehrfachfunktionelle Verbindungen der Formel (I) können Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung analog zu den entsprechenden monofunktionellen Verbindungen nach Formel (I) erhalten werden können. Vorzugsweise haben diese urethanhaltigen Verbindungen nach Formel (I) eine mittlere Funktionalität von höchstens 2 und ein zahlenmittleres Molekulargewicht von 300 bis 2500 g/mol, bevorzugt von 500 bis 1500 g/mol.

Als Verbindungen der Formel (I) können auch Polysiloxane wie Bis(hydroxyalkyl)polydialkylsiloxane, bevorzugt Bis(hydroxyalkyl)polydimethylsiloxane mit zahlenmittleren Molekulargewichten Mn von vorzugsweise 400 bis 2000 g/mol eingesetzt werden.

Die di- oder trifunktionellen Verbindungen der Formel (I) bewirken eine Vernetzung zwischen den Reaktionsprodukten aus Polyisocyanat und monofunktionellen Verbindungen der Formel (I). Beispielsweise können die Ausgangsprodukte in solchen Mengen eingesetzt werden, daß die di- oder trifunktionellen Verbindungen der Formel (I) das Zentrum des Moleküls darstellen, und daß an sie an die Polyisocyanate gebunden sind, deren verbleibende Isocyanatgruppen mit monofunktionellen Verbindungen der Formel (I) umgesetzt sind bzw. werden. Es kann naturgemäß auch eine gewisse Übervernetzung oder Untervernetzung vorliegen.

Bei der Umsetzung mit den di- oder trifunktionellen Verbindungen der Formel (I) werden vorzugsweise 0% bis 50% und bevorzugt 0% bis 25% der ursprünglich eingesetzten NCO-Gruppen umgesetzt. Besonders bevorzugte Produkte werden ganz ohne Verwendung von di- oder trifunktionellen Verbindungen der Formel (I) erhalten.

Die Umsetzung der Polyisocyanate mit verschiedenen Verbindungen der Formel (I) kann in einem einzigen Reaktionsschritt oder in mehreren Reaktionsschritten nacheinander durchgeführt werden. Das kann in beliebiger Reihenfolge geschehen. In vielen Fällen ist es allerdings zweckmäßig, das Polyisocyanat nacheinander mit den Komponenten in der Reihenfolge zuerst monofunktionelle und danach polyfunktionelle Verbindungen umzusetzen. Die Isocyanataddition kann, je nach Reaktivität der einzelnen Reaktionspartner, in dem für diese Art von Reaktion üblichen Temperaturbereich von Raumtemperatur bis etwa 150 °C erfolgen. Zur Beschleunigung und Reduzierung von Nebenreaktionen können die nach dem Stand der Technik bekannten und üblichen Katalysatoren wie tertiäre Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)-acetylacetonat, Zinnverbindungen, z. B. Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Isocyanat eingesetzt.

### Verbindungen der Formel (II) (Komponente (c))

Nach Umsetzung der freien NCO-Gruppen der uretdiongruppenhaltigen Polyisocyanate mit den Verbindungen der Formel (I) erfolgt die Addition von einer oder mehreren Verbindungen der Formel (II) Z-NHR über die reaktive Aminogruppe an die Uretdiongruppen. Bevorzugt steht -NHR für -NH₂.

Je nach Reaktivität der eingesetzten Verbindungen wird diese Reaktion vorzugsweise in einem Temperaturbereich von etwa 20°C bis 200°C, noch bevorzugter von 60°C bis 150°C durchgeführt. Vorzugsweise wird dabei das Uretdionaddukt zum vorgelegten Amin zugegeben. Gegebenenfalls kann die Addition in Gegenwart von geeigneten Katalysatoren, z. B. Amidinen oder Lewissäuren durchgeführt werden. Eine Übersicht über geeignete Katalysatoren findet sich z. B. in der DE-19 856 878 und der dort zitierten Literatur. Üblicherweise ist eine Verwendung solcher Katalysatoren aber nicht erforderlich.

Eine Gruppe von Verbindungen, die als Z-NHR verwendet werden können, besteht aus aliphatischen Diaminen mit einer tertiären Aminogruppe und einer primären oder sekundären Aminogruppe wie z.B. 2-(Diethylamino)ethylamin, 3-(Dimethylamino)propylamin, 3-(Diethylamino)propylamin, N,N-Diethyl-1,4-butandiamin, 1-Diethylamino-4-aminopentan, wovon 3-(Dimethylamino)propylamin bevorzugt ist.

Bei einer weiteren Gruppe steht in Formel (II) Z für eine ein- oder zweikernige heterocyclische Gruppe, von der ein Ringstickstoffatom, vorzugsweise über eine Alkylengruppe mit 2 bis 5 Kohlenstoffatomen, an die Gruppe - NHR gebunden ist. Bevorzugte Heterocyclen sind Triazol, Pyrimidin, Imidazol, Pyridin, Morpholin, Pyrrolidin, Piperazin, Piperidin, Benzimidazol, Benzothiazol und/oder Triazin und besonders bevorzugt Imidazol und Benzimidazol. Diese Heterocyclen können einen oder mehrere Substituenten aufweisen. Vorzugsweise tragen sie eine der folgenden Gruppen: Alkyl- und/oder Alkoxy-Gruppen mit 1 bis 6 Kohlenstoffatomen, vorzugsweise 1 bis 4 Kohlenstoffatomen oder Aminogruppen. Unter den Alkoxygruppen ist die Methoxygruppe bevorzugt.
Die oben genannten Heterocyclen können direkt mit der Gruppe -NHR verknüpft sein. Sie können aber auch mittels einer auf diesem Gebiet üblichen Gruppe verbunden sein, wie beispielsweise Alkylengruppen mit 2 bis 10 Kohlenstoffatomen, vorzugsweise 2 bis 4 Kohlenstoffatomen oder Polyethergruppen mit der gleichen Zahl an Kohlenstoffatomen. Das gleiche gilt für die tertiäre Aminogruppe.

Es ist bevorzugt, daß die heterocyclischen Gruppen über ein Ringstickstoffatom und eine Alkylengruppe, vorzugsweise mit 2 bis 5 C-Atomen an die Gruppe -NHR gebunden sind. Die heterocyclische Gruppe kann naturgemäß neben diesem Ringstickstoffatom noch weitere Heteroatome einschließlich weiterer Ringstickstoffatome enthalten. Diese weiteren Ringstickstoffatome können gegebenenfalls auch noch ein Wasserstoffatom gebunden enthalten (wie beispielsweise beim N-Alkylpiperazin).

Die heterocyclischen Gruppen können aber, wie beim Benzimidazol, auch mittels eines Ringkohlenstoffatoms an die Gruppe -NHR, gegebenenfalls über eine Alkylengruppe, gebunden sein. Die Art der Bindung hängt im wesentlichen von der jeweiligen Konstitution der heterocyclischen Gruppen und den Reaktionsfähigkeiten der einzelnen Atome ab, wie dies dem Durchschnittsfachmann bekannt ist.

Grundsätzlich können als Verbindungen der Formel (II) diejenigen eingesetzt werden, die auch auf diesem Gebiet der Technik bereits zur Herstellung von anderen Dispergiermitteln verwendet wurden, wie sie beispielsweise in der US-A-40 32 698 beschrieben sind. Beispiele für Verbindungen der Formel (II) sind N-(3-Aminopropyl)imidazol, N-(3-Aminopropyl)morpholin, N-(2-Aminoethyl)piperidin, 1-Methylpiperazin und Aminoethylpiperazin. Charakteristisch für diese Verbindungen ist, daß sie pro Molekül mindestens eine Aminogruppe mit mindestens ein Zerewitinoff-Wasserstoffatom enthalten, das bevorzugt mit den Uretdionringen reagiert, und daß sie darüber hinaus eine stickstoffhaltige basische Gruppe ohne reaktiven Wasserstoff besitzen. Diese basischen Gruppen werden gemäß dem Stand der Technik auch durch ihren pKa-Wert gekennzeichnet (vergl. US-A-3,817,944; US-4,032,698 und US-4,070,388). Bevorzugt sind Verbindungen mit basischen Gruppen, die einen pKa-Wert von 2 bis 14, besonders bevorzugt von 5 bis 14, und ganz besonders bevorzugt von 5 bis 12 besitzen. Der pKa-Wert kann Tabellenwerken entnommen werden. Die vorstehend angegebenen Grenzwerte beziehen sich auf die Messung des pKa-Wertes bei 25°C in einer 0.01-molaren Konzentration in Wasser. Diese basischen Gruppen verleihen den Additionsverbindungen gemäß der Erfindung ebenfalls eine Basizität, wie auch auf diesem technischen Gebiet bekannt ist.
Eine weitere Gruppe von Verbindungen, die als Z-NHR verwendet werden können, besteht aus Polyaminen und/oder Polyiminen die gegebenenfalls modifiziert werden können. Beispiele für diese Polyamin-Komponenten sind: aliphatische Amine mit mindestens drei primären und/oder sekundären und/oder tertiären Aminogruppen. Geeignet sind aliphatische lineare Polyamine wie zum Beispiel Diethylentriamin (DETA), Triethylentetramin. (TETA) Tetraethylenpentamin (TEPA), Pentaethylenhexamin, Hexaethylenheptamin und höhere Homologe, höhere lineare Kondensate der allgemeinen Formel NH₂-(C₂H₄NH)n-C₂H₄-NH₂ mit n >5, Dipropylentriamin, (3-(2-Aminoethyl)aminopropylamin, N,N-Bis(3-aminopropyl)methylamin, Tetramethyliminobispropylamin, N,N-Dimethyldipropylentriamin, Bis-(3-dimethylaminopropyl)amin und N,N'-Bis(3-aminopropyl)-ethylendiamin.

Bevorzugt werden aliphatische verzweigte Polyamine, insbesondere Poly(C₂-C₄)-alkylenamine, mit primären, sekundären und tertiären Aminogruppen eingesetzt. Besonders bevorzugt sind die auch unter dem Namen Polyethylenimine bekannten Aziridinhomopolymere wie z.B. die Lupasol® Typen der Fa. BASF oder die Epomin® Typen der Fa. Nippon Shokubai. Diese werden nach bekannten Verfahren, z.B. durch die Polymerisation von Ethylenimin, hergestellt. Das Verhältnis von primären zu sekundären zu tertiären Stickstoff-Atomen beträgt vorzugsweise - wie bei den entsprechenden handelsüblichen Produkten üblich - etwa 1 : 2 : 1. Unter diesen aliphatischen verzweigten Polyaminen werden bevorzugt Typen mit einer mittleren Molmasse von ca. 200 - 200000 g/mol (Mw; gemessen durch Lichtstreuung), besonders bevorzugt Typen mit einem mittleren Mw von ca. 300 - 40000 g/mol eingesetzt. Die Protonen am Stickstoff dieser Verbindungen können dabei vorzugsweise gegen Alkyl-, Aryl- und/oder Aralkylgruppen ausgetauscht sein und/oder quaternisiert vorliegen.

Neben den nicht modifizierten Polyaminen können auch teilweise modifizierte Polyamine, wie in der EP 0 893 155 beschrieben, zur Addition eingesetzt werden. Bei diesen modifizierten Polyaminen kann es sich z.B. um Kondensate der oben beschriebenen Polyamine mit Carbonsäuren wie z.B. Stearinsäure, Ölsäure oder Tallölfettsäure handeln, die über Amidgruppierungen mit dem Polyamin verbunden sind. Auch ist es möglich, Teile des primären oder sekundären Polyamins mit Monoisocyanaten wie z.B. Stearylisocyanat und/oder Polyisocyanaten mit n-NCO-Gruppen, von denen (n-1) NCO-Gruppen vorher mit anderen Reaktanden reagiert haben, umzusetzen. Zweckmäßig werden maximal 50%, bevorzugt maximal 20% und besonders bevorzugt 0% der reaktiven Aminogruppen auf diese Weise vor der Uretdionaddition umgesetzt. Reaktive Aminogruppen in diesem Sinne sind primäre oder sekundäre Aminogruppen.

Eine weitere geeignete Klasse von Polyaminen, sind Homo-, Co- oder Blockcopolymere mit mindestens drei primären oder sekundären Aminogruppen, die sich entweder durch radikalische oder ionische Polymerisationen herstellen lassen, oder mittels einer polymeranalogen Reaktion an einem bereits vorgebildeten Polymer gebildet oder in ein solches eingefügt werden. Derartige Homo-, Co- oder Blockcopolymerisate besitzen ein zahlenmittleres Molekulargewicht von bis zu 1000000 g/mol, vorzugsweise von 600 bis 200000 g/mol. Besagte Polyamine lassen sich einzeln oder in Mischung einsetzen.

Die nach der Addition der Polyamine/Polyimine erhaltenen Produkte können noch reaktive Aminogruppen enthalten, die weitere Modifikationen ermöglichen, um eine weiter verbesserte Anpassung an die einzusetzenden Systeme zu erlauben. So ist es möglich die Polyamine/Polyimine, vor oder nach der Uretdionaddition mit epoxifunktionellen Stoffen, Carbonaten, Carbonsäuren, und/oder α,β-ungesättigten Verbindungen umzusetzen oder mehrere der oben beschriebenen Reaktionen durchlaufen zu lassen. Geeignete epoxifunktionelle Stoffe sind zum Beispiel aliphatische, cycloaliphatische und/oder aromatische Glycidylether wie beispielsweise C₁-C₂₀- Alkylglycidylether, Phenylglycidether, Kresylglycidylether, Naphthylglycidylether, Butylglycidether, p-tert.-Butyl-phenylglycidether, 2-Ethyl-Hexylglycidether, C₁₂-C₁₄₋Glycidether, Allylglycidylether, 2,3-Epoxypropylneodecanoat (Cardura® E 10, Resolution Performance Products) oder Bisphenol A-basierte Epoxide (Epikote-Typen). Bevorzugt sind monofunktionelle Epoxide.

Geeignete Carbonate sind aliphatische, cycloaliphatische und/oder aromatische Kohlensäurester wie zum Beispiel Dialkylcarbonate wie Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Geeignete Carbonsäuren und Carbonsäureanhydride sind aliphatische, cycloaliphatische und/oder aromatische Carbonsäuren und deren Anhydride wie beispielsweise Essigsäure, Propionsäure, Benzoesäure, Nitrobenzoesäure, Acetanhydrid, Bernsteinsäureanhydrid, Maleinsäureanhydrid, Phthalsäureanhydrid, Tetrahydrophthalsäureanhydrid, Alkyltetrahydrophthalsäureanhydrid , Hexahydrophthalsäureanhydrid, Alkylhexahydrophthalsäureanhydrid, Trimellithsäureanhydrid, Alkenyl- und/oder Alkyl-Bernsteinsäureanhydrid mit bevorzugt 1 bis 20 Kohlenstoffatomen in den Alkenyl- oder Alkylketten.

Eine besonders bevorzugte Ausführungsform stellen Additionsprodukte dar, die durch Umsetzung von vinylogen Verbindungen mit noch vorhandenen primären und sekundären Aminogruppen der Polyamine im Sinne einer Michael-Reaktion entstehen. Der Vorteil der Michael-Reaktion besteht darin, daß sich die Zahl der Aminogruppen der Polyamine während der Reaktion nicht ändert. Alle Aminogruppen stehen auch weiterhin für die Adsorption an die Feststoffoberfläche zur Verfügung. Als vinyloge Verbindung in der Michael-Reaktion können z.B. α,β-ungesättigte Carbonylverbindungen wie α,β-ungesättigte Carbonsäureester oder α,β-ungesättigte Nitrile eingesetzt werden. Bevorzugte Ausführungsformen dieser Michael-Addukte sind Reaktionsprodukte mit Acrylsäure- und/oder Methacrylsäureestern mit aliphatischen, aromatischen und/oder aralkylischen Resten wie z.B. Methyl(meth)acrylat, Butyl(meth)acrylat, Ethylhexyl(meth)acrylat, Lauryl(meth)acrylat, Stearyl(meth)acrylat, Benzyl(meth)acrylat; ethoxylierte und/oder propoxylierte (Meth)acrylate sowie hydroxyfunktionelle (Meth)acrylate wie Hydroxyethyl(meth)acrylat und Hydroxypropyl(meth)acrylat. Bevorzugt werden die jeweiligen Acrylsäurederivate umgesetzt. Weitere geeignete α,β-ungesättigte Verbindungen sind zum Beispiel Maleinsäureanhydrid, Maleinsäure- und Itaconsäureester wie z.B. Diethylmaleinat oder Dibutylmaleinat sowie α,β-ungesättigte Phosphonsäuren wie z.B. Vinylphosphonsäure. Bei den Michael-Addukten können etwa 5 - 100 % der primären und sekundären Aminogruppen dieser Reaktion unterworfen werden. Bevorzugt werden 15 - 85 %, besonders bevorzugt werden 25 - 75 % der primären und sekundären Aminogruppen umgesetzt. Bevorzugt werden 0,5 bis 90 Mol % (bezogen auf die primären und sekundären Aminogruppen) und besonders bevorzugt 1 bis 50 Mol %, der primären und/oder sekundären Aminogruppen nach der Uretdionaddition mit Carbonsäuren unter Amidbildung, mit Isocyanaten unter Harnstoffbildung und/oder mit Epoxiden unter Bildung von α-Amino-β-Hydroxyverbindungen und/oder mit α,β-ungesättigten Verbindungen im Sinne einer Michael-Addition oder Mischungen der vorstehenden Reaktanden umgesetzt. Wenn als Verbindungen der Formel (II) Polyamine mit mehr als 3 reaktiven Aminogruppen eingesetzt werden, die nach der Uretdionaddition weiter modifiziert werden, sollten weniger als 20 mol%, bevorzugt weniger als 5 mol%, besonders bevorzugt 0 mol% der monofunktionellen Verbindungen nach Formel (I) aus aromatischen Verbindungen mit einem zahlenmittleren Molekulargewicht kleiner 200 g/mol bestehen, insbesondere wenn mit Acrylsäurealkylestern modifiziert wird.

Zur Herstellung der erfindungsgemäßen Additionsverbindungen können auch Gemische von verschiedenen Ausgangsstoffen wie Gemische von uretdionhaltigen Polyisocyanaten, und/oder Verbindungen nach Formel (I) und/oder (II) eingesetzt werden.

### Versalzungsprodukte der erfindungsgemäßen Additionsverbindungen

Durch die basischen Gruppen sind die Additionsverbindungen zur Salzbildung befähigt. Sie können im Sinne der Erfindung als Dispergiermittel auch in Form von derartigen Salzen eingesetzt werden. In manchen Fällen läßt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Basizität der Produkte stört, zum Beispiel in sauer katalysierten Systemen, lassen sich häufig Verbesserungen durch teilweise oder vollständige Neutralisation erreichen.

Diese Salze werden aus dem erhaltenen Reaktionsprodukt durch Neutralisation mit einer oder mehreren organischen oder anorganischen Säuren oder durch Quaternisierung mit Quaternisierungsagentien, wie beispielsweise Alkylhalogeniden, wie Methyliodid, erhalten. Die zu verwendende Säuremenge richtet sich nach dem Einsatzgebiet. Je nach Einzelfall können die Säurekomponenten äquimolar, im Unterschuß oder im Überschuß eingesetzt werden. Bevorzugt wird etwa äquimolar neutralisiert. Bevorzugt sind Salze mit organischen Monocarbonsäuren oder sauren Phosphorsäurestern. Beispiele für solche sauren Phosphorsäurester sind aufgeführt in EP 893 155, EP 417 490 und US 5 143 952. Beispiele für Carbonsäuren sind aliphatische und/oder aromatische Carbonsäuren wie kurz- oder langkettige Fettsäuren, Ameisensäure, Essigsäure, Ölsäure, Stearinsäure, Rizinolsäure, natürliche gesättigte oder ungesättigte pflanzliche oder tierische Fettsäuren und deren Maleinsäureanhydrid-Addukte, Tallölfettsäure, dimerisierte oder trimerisierte Fettsäuren, Benzoesäure, Citronensäure und Abietinsäure.

Die Herstellung der erfindungsgemäßen Additionsverbindungen kann, analog zum Stand der Technik, je nach Viskosität, in Substanz oder in Gegenwart von geeigneten Lösungsmitteln, Lösungsmittelgemischen oder anderen geigneten Trägermedien durchgeführt werden. Geeignet sind alle Lösungsmittel oder Trägermedien, die nicht reaktiv sind oder deren Reaktivität gegenüber den Reaktionspartnern zu vernachlässigen ist und in denen die Reaktanden und die Reaktionsprodukte zumindest teilweise löslich sind. z.B. Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether, Ester wie Ethylacetat, Butylacetat, Butyrolacton, Phthalate oder andere Weichmacher, Di- oder Polycarbonsäureester, als "Dibasic Ester" bezeichnete Dialkylester von C₂ bis C₄ Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon usw. Zweckmäßig wählt man das oder die Lösemittel bzw. Trägermedien bereits unter Berücksichtigung des geplanten Einsätzgebietes aus. Zum Beispiel werden für erfindungsgemäße Additionsverbindungen für den Einsatz in wasserverdünnbaren Lacksystemen oder zur Belegung von Pigmenten in wäßriger Suspension nach der Pigmentsynthese zweckmäßig Lösemittel eingesetzt, die ganz oder teilweise wasserverdünnbar sind. Sollen die Produkte zum Beispiel dort eingesetzt werden, wo die Anwesenheit von VOC (volatile organic compounds) nicht erwünscht ist, sollte die Formulierung möglichst lösemittelfrei sein oder in entsprechend hochsiedenden Trägermedien erfolgen.

Je nach Anwendungsgebiet können die zur Synthese verwendeten Lösungsmittel im Reaktionsgemisch verbleiben oder werden ganz oder teilweise entfernt und gegebenenfalls durch andere Lösungsmittel oder Trägermedien ersetzt. Die erfindungsgemäßen Additionsverbindungen können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel anderen Netz- und Dispergiermitteln, Antiabsetzmitteln, oberflächenaktiven Additiven wie z.B. Silikonen usw.

Das Lösungsmittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen durch Zusatz von Nichtlösern wie aliphatischen Kohlenwasserstoffen, beispielsweise Hexan, anschließendem Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösungsmittel angelöst werden oder gegebenenfalls in reiner Form z. B. bei Pulverlacken, eingesetzt werden. Gegebenenfalls kann das Lösungsmittel, in dem das Additionsprodukt gelöst ist, nach Zusatz von geeigneten höher siedenden Lösungsmitteln, gegebenenfalls unter vermindertem Druck und/oder azeotrop unter Zusatz von Wasser, abdestilliert werden Auf diese Weise kann das Additionsprodukt in ein für das jeweilige Anwendungsgebiet geeignetes Trägermedium überführt werden.

Die Umsetzungen können in Gegenwart von üblichen Katalysatoren durchgeführt werden, z. B. organischen Zinnverbindungen, wie Dibutylzinndilaurat, anderen organometallischen Verbindungen wie Eisenacetylacetonat, tertiären Aminen wie Triethylendiamin , Enzymen oder dergleichen.

Durch Variation der Substituenten der Formel (I), deren Mengenverhältnissen und/oder deren Molekulargewichten kann die Verträglichkeit der erfindungsgemäßen Additionsverbindungen auf die unterschiedlichsten Lösemittel, Trägermedien, Bindemittel, Harze, Feststoffe und gegebenenfalls weitere polymere Verbindungen abgestimmt werden, welche in Überzugs und Formmassen vorliegen, in denen die Additionsverbindungen gemäß der Erfindung zur Anwendung kommen.

Für den Einsatz in hochpolaren Systemen wie z. B. Wasserlacken und Elektrotauchlackierungen sollten die Reste Y einen ausreichend hohen Anteil an polaren Gruppen wie z.B. Polyethylenoxiden enthalten, um eine für den jeweiligen Einsatzbereich ausreichende Wasserlöslichkeit zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt.

Beim Einsatz in unpolaren Systemen wie Langölalkydlacken, PVC-Plastisolen oder Polyolefinen sollte ein entsprechender Anteil an unpolaren Gruppen vorliegen und beim Einsatz in Systemen, bei denen eine breite Verträglichkeit wichtig ist, wie z. B. Pigmentkonzentraten, ist eine ausgewogene Kombination von polaren und unpolaren Gruppen von Vorteil.

Wenn die Additionsverbindungen z. B. in einem Polyurethanharz oder in einem Lack, dessen Bindemittel ein Polyurethan ist, eingesetzt werden, ist es zweckmäßig, solche erfindungsgemäßen Additionsverbindungen einzusetzen, die in ihrem Molekül aufgrund der in den Ausgangsverbindungen der Formel (I) enthaltenen Gruppen auch Urethangruppen oder ähnliche Gruppen enthalten, die - wie dem Fachmann bekannt ist, mit Polyurethanen verträglich sind. Das gleiche gilt sinngemäß für z. B. Polyacrylate, Polyester, Alkydharze usw.

Sinngemäß gilt dies auch für die Substituenten der Formel (II), die von besonderem Einfluß auf die Affinität der erfindungsgemäßen Additionsverbindungen zu den verwendeten Feststoffen sind, die dispergiert werden sollen.

Gegenstand der Erfindung ist auch ein Verfahren zur Herstellung der erfindungsgemäßen Additionsverbindungen, bei welchem
(A)
   (a) ein oder mehrere uretdiongruppenhaltige Polyisocyanate mit
   (b) einer oder mehreren Verbindungen der Formel (I)

      Y-(XH)ₙ (I)

      wobei
      XH für eine gegenüber Isocyanaten reaktive Gruppe steht und
      Y für eine nicht gegenüber Isocyanaten reaktive, monomere oder polymere Gruppe steht, die eine oder mehrere aliphatische, cycloaliphatische, araliphatische und/oder aromatische Gruppen umfaßt, wobei Y eine zahlenmittlere Molmasse kleiner 20000 g/mol besitzt und
      n für 1, 2 oder 3 steht und
      wobei für mindestens 50 Mol-% der Verbindungen der Formel (I) gilt, daß
      n = 1 ist,
      unter der Vorgabe umgesetzt werden,
      daß im wesentlichen alle freien Isocyanatgruppen der Komponente (a) mit den Verbindungen der Formel (I) zu einem Uretdiongruppen enthaltendem Zwischenprodukt umgesetzt werden,
(B) die Uretdiongruppen mit
   (c) einer oder mehreren Verbindungen der allgemeinen Formel (II)

      Z-NHR (II)

      zur Reaktion gebracht werden,
   worin
   R für Wasserstoff oder eine geradkettige oder verzweigte Alkylgruppe mit 1 bis 4 Kohlenstoffatomen steht und
   Z einen aliphatischen, cycloaliphatischen und/oder aromatischen basischen Rest darstellt und
(C) optional die im Reaktionsprodukt gegebenenfalls noch vorhandenen reaktiven Aminogruppen mit gegenüber Aminogruppen reaktiven Verbindungen umgesetzt werden und
(D) optional die Additionsverbindungen mit organischen oder anorganischen Säuren und/oder Quaternisierungsagentien umgesetzt werden.

Weiterer Gegenstand der Erfindung ist die Verwendung der vorstehend beschriebenen erfindungsgemäßen Additionsverbindungen als Dispergiermittel und als Dispersionsstabilisatoren.

Gegenstand der Erfindung sind auch in flüssige Systeme einzuarbeitende pulver- oder faserförmige Feststoffe, die mit diesen Additionsverbindungen als Dispergiermittel und als Dispersionsstabilisatoren beschichtet sind.

Der Einsatz der erfindungsgemäßen Dispergiermittel kann gemäß dem Stand der Technik für bekannte Dispergiermittel erfolgen, wobei anstelle der nach dem Stand der Technik bekannten Dispergiermittel diejenigen gemäß der Erfindung eingesetzt werden. So können diese z.B. bei der Herstellung von Pigmente und/oder Füllstoffe enthaltenden Lacken, Druckfarben, Pasten, Pigmentkonzentraten und/oder Formmassen eingesetzt werden. Beispielsweise lassen sich die Dispergiermittel zur Herstellung eines Pigmentlacks, wobei ein Lackbindemittel und/oder Lösemittel, Pigmente und gegebenenfalls Füllstoffe das Dispergiermittel und übliche Hilfsstoffe vermischt werden, verwenden. Beispiele für Beschichtungen auf Wasserbasis sind kathodische oder anodische Elektrotauchlackierungen zum Beispiel für Automobilkarossen.

Die erfindungsgemäßen Dispergiermittel eignen sich insbesondere auch zur Herstellung von Feststoffkonzentraten, wie zum Beispiel Pigmentkonzentrate. Dazu werden die erfindungsgemäßen Verbindungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Diese Feststoffkonzentrate können dann in unterschiedliche Bindemittel wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Additionsverbindungen dispergiert werden, und eignen sich dann besonders zur Pigmentierung von thermoplastischen und duroplastischen Kunststoffformulierungen.

Gegenstand der Erfindung ist letztlich auch die Verwendung eines derartigen Dispergiermittels zur Herstellung eines pigmentierten Überzuges auf einem Substrat, wobei der Pigmentlack auf das Substrat aufgebracht wird und wobei der auf das Substrat aufgebrachte Pigmentlack eingebrannt oder ausgehärtet bzw. vernetzt wird.

Die Dispergiermittel können alleine oder zusammen mit nach dem Stand der Technik üblichen Bindemitteln eingesetzt werden. Beim Einsatz in Polyolefinen kann es z.B. vorteilhaft sein, entsprechende niedermolekulare Polyolefine als Trägermaterialien, zusammen mit dem Dispergiermittel, einzusetzen.

Eine erfindungsgemäße Verwendung der Dispergiermittel besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit dem Dispergiermittel beschichtet sind. Derartige Beschichtungen von organischen wie auch anorganischen Feststoffen werden in bekannter Weise ausgeführt, wie sie z.B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen z.B. durch Zusatz der erfindungsgemäßen Additionsprodukte zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke, gegenüber nicht behandelten Pigmenten aus.

Neben der oben beschriebenen Anwendung als Dispergiermittel und/oder Beschichtungsmittel für pulver- und faserförmige Feststoffe können die erfindungsgemäßen Dispergiermittel auch als Viskositätsreduzierer und Kompatibilisatoren in Kunstharzen oder zur Verbesserung der Verträglichkeit von Mischungen unverträglicher Komponenten wie zum Beispiel Polymermischungen eingesetzt werden. Beispiel für solche Kunstharze sind die sogenannten "sheet molding compounds" (SMC) und "bulk molding compounds" (BMC), die aus stark füiistoff- und faserhaltigen ungesättigten Polyesterharzen bestehen. Ihre Herstellung und Verarbeitung ist beispielhaft in DE-A-36 43007 beschrieben. Ein Problem bei SMC- und BMC-Kunstharzmischungen besteht darin, daß oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.
Ein weiteres Beispiel sind unverträgliche Polyol-Mischungen, Poly-Isocyanat-Mischungen oder Polyol-Treibmittelmischungen die zur Polyurethan-Herstellung verwendet werden. Durch die erfindungsgemäßen Additionsverbindungen können in vielen Fällen die aus dieser Unverträglichkeit resultierenden Separationsprobleme ganz oder teilweise vermieden werden.

Die erfindungsgemäßen Dispergiermittel werden im allgemeinen in einer Menge von 0,5 bis 100 Gew. %, bezogen auf den zu dispergierenden Feststoff, eingesetzt. Zur Dispergierung spezieller Feststoffe können aber auch höhere Mengen der Dispergiermittel notwendig sein.

Die Menge an Dispergiermittel ist im wesentlichen abhängig von der zu belegenden Oberfläche des zu dispergierenden Feststoffes. Ruß benötigt z.B. wesentlich größere Dispergiermittelmengen als z.B. TiO₂.

Beispiele für pulver- oder faserförmige Feststoffe sind solche, wie sie gemäß dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden, und anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente auf Basis von Ruß, Graphit, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden von Nickel, Titan, Zink, Mangan, Cobalt, Eisen, Chrom, Antimon, Magnesium, Aluminium (beispielsweise Nickeltitangelb oder Chromtitangelb), magnetischen Pigmenten auf Basis von Reineisen, Eisenoxiden und Chromoxiden oder Mischoxyden, Metalleffektpigmente wie Aluminiumbronzen Perlglanzpigmente, fluoreszierende und phosphoreszierende Leuchtpigmente.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126.

Des weiteren lassen sich auch mineralische Füllstoffe, wie beispielsweise Calciumcarbonat, Calciumoxid aber auch Flammschutzmittel wie z.B. Aluminium- oder Magnesiumhydroxid dispergieren. Mattierungsmittel wie z.B. Kieselsäuren lassen sich ebenfalls hervorragend dispergieren und stabilisieren.

### BEISPIELE

Im folgenden wird die Erfindung anhand von Beispiele veranschaulicht. Bei molekular uneinheitlichen Substanzen stellen die im folgenden angegebenen Molekulargewichte Durchschnittswerte des Zahlenmittels dar (was im übrigen, sofern nicht anders vermerkt, für die gesamte Beschreibung gilt). Die Molekulargewichte bzw. zahlenmittleren Molekulargewichte Mn können nach üblichen Verfahren bestimmt werden, z. B. durch Ermittlung der OH-Zahl, der Amin-Zahl, kryoskopisch oder per Gelpermeationschromatographie. Sofern nicht anders ausgeführt, handelt es sich bei Teilen um Gewichtsteile und bei Prozenten um Gewichtsprozente. Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5,1977.

Die Herstellung der hydroxyfunktionellen Caprolactonpolyester erfolgt wie zum Beispiel in der EP 158678 beschrieben.

### Herstellung der Intermedia (= Produkte der Umsetzung zwischen uretdionhaltigen Polyisocyanten und Verbindungen der Formel (I))

### Herstellung von Intermedio 11

### a) Caprolactonpolyester (Verbindung der Formel (I); mittleres Molekulargewicht Mn von 1200):

Unter Schutzatmosphäre werden 20,1 Teile Hexadecanol und 79,9 Teile ε-Caprolacton homogenisiert, mit 0,002 Teilen Dibutylzinndilaurat versetzt und auf 160° C erhitzt. Man rührt bei dieser Temperatur, bis ein Festkörpergehalt von 98 % erreicht ist. Der erhaltene Polyester hat eine OH-Zahl von 47.

### b) Umsetzung eines aliphatischen HDI-Uretdions mit a)

22,9 Teile aliphatisches HDI-Uretdion mit einem NCO-Gehalt von 21,8% werden mit 46,5 Teilen des unter a) beschriebenen Caprolactonpolyesters, 9,2 Teilen n-Decanol und 21,4 Teilen eines monohydroxyfunktionellen PO-Polyethers (Mn=1100) unter Zugabe von 0,01 Teilen Dibutylzinndilaurat so lange bei etwa 80°C gerührt, bis alle freien NCO-Gruppen abreagiert sind und kein NCO-Gehalt mehr nachweisbar ist.

### Allgemeine Herstellvorschrift für die Intermedios:

Das angegebene Polyisocyanat wird mit den in der nachfolgenden Tabelle angegebenen Komponenten gemischt. Dann wird auf 80°C aufgeheizt, 0,01% Dibutylzinndilaurat zugegeben und bei 80°C gerührt, bis der NCO-Gehalt auf <=0,1% gesunken ist.

Die so erhaltenen Zwischenprodukte können unmittelbar nach Herstellung weiter wie nachstehend beschrieben mit aminofunktionellen Verbindungen umgesetzt werden. Da sie keine freien NCO-Gruppen mehr enthalten, sind sie lagerstabil und können daher anstelle der unmittelbaren weiteren Umsetzung auch über einen beliebigen Zeitraum für eine spätere Verwendung gelagert werden.
Die Herstellung der Polyester erfolgt wie unter Intermedio I**1** a) beschrieben.
Das nicht erfindungsgemäße Intermedio I18 ist nicht lagerstabil und muß daher unmittelbar nach Herstellung weiterverarbeitet werden.

**Tabelle 1 - Intermedios**

| **Nr.** | **Polyisocyanat** | **Gew. Teile** | **Komponente 1** Verbindung der Formel (I) | **Gew. Teile** | **Komponente 2** Verbindung der Formel (I) | **Gew. Teile** | **Komponente 3** Verbindung der Formel (I) | **Gew. Teile** | **NCO Umsatz in %** |
|---|---|---|---|---|---|---|---|---|---|
| I1 | P1 | 22,9 | C16 CPE 1200 | 46,5 | n-Decanol | 9,2 | PO 1100 | 21,4 | 33/50/17 |
| I2 | P1 | 22,2 | M500 CPE 900 | 67,7 | Oleylalkohol | 10,1 | | | 67/33/- |
| I3 | P1 | 20,3 | MPEG 500 | 12,9 | M350 CPE 700 | 36,0 | C16 CPE 1200 | | 30,8 25/50/25 |
| I4 | P1 | 26,3 | MPG-CPE 1200 | 40,0 | MPEG 750 | 25,0 | Ethylhexanol | | 8,7 25/25/50 |
| I5 | P2 | 18,2 | C10 gest.Capapoly. M~700 | 58,8 | PO 1100 | 23,0 | | | 80/20/- |
| I6 | P2 | 31,1 | Oleylalkohol | 24,1 | MPEG 500 | 44,8 | | | 50/50/- |
| I7 | P3 | 22,0 | EO/PO 1100 | 78,0 | | | | | 100/-/- |
| I8 | P4 | 21,2 | C4 CPE 800 | 78,8 | | | | | 100/-/- |
| I9 | P1 | 47,7 | Butyltriglykol | 52,3 | | | | | 100/-/- |
| I10 | P1 | 17,9 | Hydroxyethylpyrrolidon | 2,6 | C16 CPE 1200 | 54,5 | PO 1100 | 25,0 | 25/50/25 |
| I11 | P1 | 19,8 | C10 CPE 1000 | 50,1 | PEG 600 | 30,1 | | | 50/50/- |
| I12 | P1 | 18,8 | EO/PO 1100 | 52,5 | Jeffamin M 600 | 28,7 | | | 50/50/- |
| I13 | P1 | 25,6 | Monophenylglykol | 9,4 | PEG 1000 | 65,0 | | | 50/50/- |
| I14 | P1 | 20,8 | MPEG 750 | 79,2 | | | | | 100/-/- |
| I15 | P1 | 9,0 | C10 CVPE 2000 | 91,0 | | | | | 100/-/- |
| I16 | P1 | 6,2 | C10 CVPE 3000 | 93,8 | | | | | 100/-/- |
| I17 | P1 | 19,2 | C10 CPE 1100 | 59,9 | PO 1100 | 17,8 | Monophenylglykol | 3,1 | 50/26/24 |
| I18* | P5 | 25,8 | C10 CPE 1100 | 17,8 | PO 1100 | 5,5 | Monophenylglykol | 1,2 | 33/17/16 |
| I19 | P1 | 31,7 | C10 CPE 750 | 60,3 | PEG 200 | 8,0 | | | 50/50/- |

| | | | | | | | | | |
|---|---|---|---|---|---|---|---|---|---|
| Der Stern "*" kennzeichnet ein nicht erfindungsgemäßes Vergleichsbeispiel **Legende zu Tabelle 1:** P1 = Aliphatisches HDI-Uretdion mit einem freien NCO-Gehalt von 21,8% z.B. Desmodur N3400, Bayer AG P2 = Aromatisches TDI-Uretdion mit einem freien NCO-Gehalt von 24,0% z.B.Thanecure T9, TSE Industries P3 = Aliphatisches IDPI-Uretdion mit einem freien NCO-Gehalt von 13,5% z.B.Crelan VP LS 2147, Bayer AG P4 = Aliphatisches IDPI-Uretdion mit einem freien NCO-Gehalt von 19,5% z.B. Crelan VP LS 2347, Bayer AG P5 = Aromatisches TDI-Polyisocyanurat mit einem freien NCO-Gehalt von 8,0% als 51%ige Lösung in Butylacetat, z.B. Desmodur IL, Bayer AG C16 CPE 1200 = Hexadecanolgestarteter Monohydroxyfunktioneller ε-Caprolactonpolyester, mittleres Molekulargewicht Mn 1200 PO 1100 = Monohydroxyfunktioneller PO Polyether, mittleres Molekulargewicht Mn=1100 MPEG 350, 500 oder 750 = Methoxypolyethylenglykol, mittleres Molekulargewicht Mn = 350, 500 bzw 750 M500 CPE 900 = MPEG 500-gestarteter ε-Caprolactonpolyester, mittleres Molekulargewicht Mn 900 M350 CPE 700 = MPEG 350-gestarteter ε-Caprolactonpolyester, mittleres Molekulargewicht Mn 700 MPG-CPE 1200 = Monophenylglykol gestarteter monohydroxyfunktioneller Caprolactonpolyester, mittleres Molekulargewicht Mn 1200 C10 CPE 700, 750, 1000, 1100 = Decanolgestartete monohydroxyfunktionelle ε-Caprolactonpolyester, mittleres Molekulargewicht Mn 700, 750, 1000, 1100, PEG 200, 600, 1000 = Polyethylenglykol (dihydroxyfunktionell), mittleres Molekulargewicht Mn 200, 600 bzw 1000 EO/PO 1100 = Butanolgestarteter monohydroxyfunktioneller EO/PO-Polyether (EO:PO 1:1), mittleres Molekulargewicht Mn=1100 Jeffamin M 600 = Monoaminofunktioneller EO-Polyether, Mn = 600 C4 CPE 800 = Isobutanol-gestarteter monohydroxyfunktioneller Polyester aus Caprolacton und δ-Valerolacton im molaren Verhältnis 3:1, mittleres Molekulargewicht Mn 800 C10 CVPE 2000,3000 = Decanolgestarteter Polyester aus ε-Caprolacton und Valerolacton im molaren Verhältnis 3:1, zahlenmittleres Molekulargewicht Mn 2000 bzw 3000 g/mol. Bei I11 und I13 wird das PEG im Überschuß eingesetzt, so daß nur ungefähr 50% der im PEG vorhandenen OH-Gruppen mit NCO umgesetzt sind. | | | | | | | | | |

### Herstellungsbeispiel 1 der erfindungsgemäßen Verbindungen

a) In einem mit Rückflußkühler und Rührer versehenen Reaktionsgefäß werden 4,2 Teile Polyethylenimin, Mn ca. 2000 (z. B. Epomin SP018, Nippon Shokubai) vorgelegt und auf 90°C geheizt. Sobald diese Temperatur erreicht ist, werden 43,8 Teile des uretdionhaltigen Vorproduktes Intermedio I1 zugegeben. Die Reaktion kann etwas exotherm sein, braucht aber nicht gekühlt werden, die frei werdende Energie wird zur Reaktionsbeschleunigung benutzt. Bei der sich einstellenden Temperatur wird die Reaktionsmischung so lange gerührt, bis die Uretdionaddition weitgehend beendet ist. Die Reaktion läßt sich anhand der Aminzahl verfolgen: etwa 27 % der vorhandenen Aminogruppen werden umgesetzt.
b) Nachdem die Aminzahl auf 63% des Ausgangswertes gesunken ist, werden zur Umsetzung von weiteren 25% der ursprünglichen Aminogruppen 2 Teile Ethylhexylglycidether zugegeben und noch etwa 1 Stunde unter Halten der Temperatur gerührt bis die Epoxy-Gruppen weitgehend umgesetzt sind. Der Reaktionsfortschritt läßt sich per 1H-NMR-Messung verfolgen.Anschließend wird mit 15 Teilen 1,2-Propylenglykol und 35 Teilen PMA verdünnt. Das so erhaltene Produkt hat einen Festkörpergehalt von 50%.

### Allgemeine Herstellvorschrift zu den in der nachfolgenden Tabelle beschriebenen Herstellungsbeispielen :

Das Amin wird vorgelegt und das Intermedio wird bei 90°C zugegeben. Je nach Viskosität wird das Intermedio dazu erwärmt und/oder gegebenfalls in einem Teil des angegebenen Lösemittels verdünnt. Die Reaktion kann etwas exotherm sein, braucht aber nicht gekühlt werden, die frei werdende Energie wird zur Reaktionsbeschleunigung benutzt. Bei der sich einstellenden Temperatur wird die Reaktionsmischung so lange gerührt, bis die Uretdionaddition anhand der Aminzahlabnahme weitgehend beendet ist.
Danach wird entweder mit den weiteren in der Tabelle angegebenen Additionskomponenten weiter umgesetzt und anschließend nach etwa einer Stunde Reaktionszeit mit dem angegebenen Lösemittel verdünnt oder wenn keine weitere Addition erfolgt, wird direkt mit dem angegebenen Lösemittel verdünnt. Anschließend kann abgekühlt und abgefüllt werden.

**Tabelle 2 - Herstellungsbeispiele**

| **Nr.** | **Inter-medio Nr.** | **Gew.-% Inter-medio** | **Amin** | **Gew.-% Amin** | **Addition von** | **Gew.-%** | **Lösemittel** | **Gew.-%** | **Festkörpergehalt %** |
|---|---|---|---|---|---|---|---|---|---|
| 1 | I1 | 43,8 | PEI 2000 | 4,2 | Ethylhexylglycidether | 2,0 | 1,2PG/PMA 1:2 | 50,0 | 50,0 |
| 2 | I2 | 94,8 | PEI 300 | 4,3 | Acetanhydrid | 0,9 | | | 100,0 |
| 3 | I3 | 44,6 | PEI 300 | 3,7 | C13/15 Allylglycidether | 1,7 | PMA | 50,0 | 50,0 |
| 4 | I3 | 43,9 | DMAPA | 6,1 | | | PMA | 50,0 | 50,0 |
| 5 | I4 | 43,9 | PEI 300 | 5,8 | Acetanhydrid | 0,3 | PMA/PM 1:1 | 50,0 | 50,0 |
| 6 | I2 | 47,3 | DMAPA | 2,7 | | | PMA | 50,0 | 50,0 |
| 7 | I9 | 38,1 | DMAPA | 1,9 | | | NMP | 60,0 | 40,0 |
| 8 | I5 | 47,2 | DMAPA | 1,3 | API | 1,6 | NMP/PMA 2:1 | 50,0 | 50,0 |
| 9 | I6 | 45,7 | PEI 300 | 3,7 | Butylacrylat | 0,6 | NMP | 50,0 | 50,0 |
| 10 | I3 | 46,7 | DEAPA | 3,3 | | | PMA | 50,0 | 50,0 |
| 11 | I3 | 45,7 | PEI 25000/PEI 300 4:1 | 3,4 | Laurylacrylat | 0,8 | PMA/BG 2:1 | 50,0 | 50,0 |
| 12 | I9 | 42,3 | PEI 1200 | 6,2 | Bernsteinsäureanhydrid | 1,6 | PMA | 50,0 | 50,0 |
| 13 | I6 | 39,4 | 2-(2-Aminoethylamino)ethanol | 6,2 | Ethylhexylglycidether | 4,4 | PMA | 50,0 | 50,0 |
| 14 | 19 | 86,0 | Triethylentetramin | 7,7 | Laurylacrylat | 6,3 | | | 100,0 |
| 15 | I10 | 76,5 | Diethylentriamin | 2,4 | Acetanhydrid | 1,1 | PMA | 20,0 | 80,0 |
| 16 | I4 | 91,2 | PEI 300 | 6 | Propylencarbonat | 2,8 | | | 100,0 |
| 17 | I11 | 47,6 | DMAPA | 2,4 | | | PMA/PM | 50,0 | 50,0 |
| 18 | I12 | 47,6 | DMAPA | 2,4 | | | PMA | 50,0 | 50,0 |
| 19 | I13 | 47,9 | PEI 300 | 4,6 | Ethylhexylacrylat | 7,5 | PMA | 40,0 | 60,0 |
| 20 | I14 | 73,7 | PEI 300 | 3,1 | Maleinsäureanhydrid | 3,2 | PMA | 40,0 | 60,0 |
| 21 | I17 | 47,1 | API | 2,9 | | | PMA | 50,0 | 50,0 |
| 22* | I18 | 37,9 | API | 2,1 | | | PMA | 60,0 | 40,0 |
| 23 | I17 | 35,3 | PEI 1200 | 5,6 | C13/15 Allylglycidether | 11,1 | PMA | 52,0 | 48,0 |
| 24 | I19 | 44,5 | DMAPA | 4,5 | | | PMA | 40,0 | 60,0 |
| 25 | I15 | 48,7 | PEI 1200 | 1,3 | | | PM/PMA1:1 | 50,0 | 50,0 |
| 26 | I16 | 49,4 | PEI 300 | 0,6 | | | PM/PMA 1:1 | 50,0 | 50,0 |

| | | | | | | | | | |
|---|---|---|---|---|---|---|---|---|---|
| **Legende für Tabelle 2:** PEI 300 = Polyethylenimin, Mn ca. 300 z. B. Epomin SP003, Nippon Shokubai PEI 1200 = Polyethylenimin, Mn ca. 1200 z. B. Epomin SP012, Nippon Shokubai PEI 2000 = Polyethylenimin, Mn ca. 2000 z. B. Epomin SP018, Nippon Shokubai PEI 25000 = Polyethylenimin, Mn ca. 25000 z. B. Lupasol WF, BASF AG 1,2PG = 1,2-Propylenglykol PM = 1-Methoxypropanol-2 PMA = 1-Methoxy-2-propylacetat NMP = N-Methylpyrrolidon DMAPA = N,N-Dimethylaminopropylamin DEAPA = N,N-Diethylaminopropylamin API = 1(3-Aminopropyl)imidazol "*" : Beispiel 22 ist ein nicht erfindungsgemäßes Vergleichsbeispiel. Zur Herstellung werden die angegebenen Komponenten eine Stunde bei 90°C gerührt. Danach sind keine freien NCO-Gruppen mehr nachweisbar. | | | | | | | | | |

Bei dem Versuch, das nicht erfindungsgemäße Intermedio I18 analog zu den anderen Beispielen mit einem der oben angegebenen Polyethylenimine zur Reaktion zu bringen, gelierten die Reaktionsmischungen durch, so daß kein handhabbares Produkt erhalten werden konnte.

### Intermedio I20

150 g Polyglykol B 01/20 (Butyl-gestartetes Polypropylenglykol mit einer OH-Zahl von 80 g KOH/g, (Clariant) und 150 g Polyglykol B 01/120 (Butyl-gestartetes Polypropylenglykol mit einer OH-Zahl von 32 g KOH/g, (Clariant)) werden in einem Reaktionsgefäß vorgelegt. Der Wassergehalt der Reaktionsmischung sollte 0,5% nicht überschreiten. Dieser Mischung werden unter Rühren 58,2 g Desmodur 3400 zugesetzt. Nachdem die Reaktionsmischung auf 80°C erwärmt wurde setzt man als Katalysator 0,9g 10%ige DBTL-Lösung in Xylol zu. Es wird solange bei 80°C gerührt, bis der NCO-Wert kleiner 0,1 % ist.

### Allgemeine Herstellvorschrift zu den in der nachfolgenden Tabelle beschriebenen Herstellungsbeispielen 27-36:

Das Polyamin wird in einem Reaktionsgefäß vorgelegt, je nach Viskosität gegebenenfalls in einem geeigneten Lösemittel wie zum Beispiel Butylglykol verdünnt und auf 80°C erwärmt. Bei dieser Temperatur wird das Intermedio langsam zugetropft. Je nach Viskosität des Intermedios ist es notwendig, dieses entweder vorher zu erwärmen oder in einem geeigneten Lösungsmittel anzulösen. Nach Ende des Zutropfens wird ca. eine Stunde bei 80°C gerührt, bis die errechnete Aminzahl erreicht wird. Das Epoxid wird dann in einer Portion der Reaktionslösung zugegeben und diese auf 140°C erwärmt. Man rührt den Ansatz bei dieser Temperatur bis sich das Epoxid vollständig umgesetzt hat, was sich z.B. über NMR-Messungen verfolgen läßt.
Die Umsetzung mit Acrylestern erfolg prinzipiell gleich. Auch hier wird nach Beendigung der Uretdionreaktion der Acrylester in einer Portion dem Reaktionsgut zugesetzt. Die weitere Umsetzung erfolgt bei 80°C und kann ebenfalls z.B. mit NMR-Messungen verfolgt werden.
Wenn ein Epoxid und ein Acrylester addiert werden, ist es sinnvoll, zuerst das Acrylat und danach das Epoxid umzusetzen.

**Tabelle 3**

| **Beispiel** | **g Polyamin** | **g Intermedio** | **g Epoxid** | **g Acrylester** |
|---|---|---|---|---|
| 27 | 10g Lupasol WF | 14 g I20 | 24 g Grilonit RV 1814 | |
| 28 | 10g Lupasol WF | 14 g I20 | 24 g Cardura E 10 | |
| 29 | 10g Lupasol WF | 14 g I20 | | 16 g Butylacrylat |
| 30 | 10g Lupasol WF | 14 g I20 | | 20 g Isobornylacrylat |
| 31 | 10g Epomin SP 006 | 14 g I20 | 24 g Grilonit RV 1814 | |
| 32 | 10g Epomin SP 006 | 14 g I20 | 24 g Cardura E 10 | |
| 33 | 10g Epomin SP 006 | 14 g I20 | | 16 g Butylacrylat |
| 34 | 10g Epomin SP 006 | 14 g I20 | | 20 g Isobornylacrylat |
| 35 | 10g Lupasol WF | 20 g I20 | 24 g Grilonit RV 1814 | 16 g Butylacrylat |
| 36 | 10g Epomin SP 006 | 20 g I20 | 24 g Grilonit RV 1814 | 20 g Butylacrylat |

| | | | | |
|---|---|---|---|---|
| Legende für Tabelle 3: Epomin SP 006 = Polyethylenimin, Mn ca. 600, Nippon Shokubai Grilonit RV 1814 = C10-C16 Alkylglycidylether Cardura E 10 = 2,3-Epoxypropylneodecanoat | | | | |

Bei dem Versuch, in den obigen Herstellungsbeispielen das nicht erfindungsgemäße Intermedio I18 anstelle von I20 zu verwenden, gelierten die Reaktionsmischungen durch, so daß kein handhabbares Produkt erhalten werden konnte.

### Herstellungsbeispiel 37

100 g des nach Beispiel 4 erhaltenen Additionsproduktes werden zur Versalzung mit 16,9 g Tallölfettsäure (Säurezahl : 195 mg KOH/g) versetzt und 20 Minuten bei 50° C gerührt. Das so erhaltene Salz hat eine Säurezahl von 28 mg KOH/g und eine Aminzahl von 28 mg KOH/g.

### Verwendungsbeispiele

Zur Beurteilung der erfindungsgemäßen Verbindungen wurden Pigmentkonzentrate auf Basis von 2 verschiedenen Anreibeharzen hergestellt. Nach 10 Tagen Lagerung bei 20°C wurde deren Viskosität bei verschiedenen Schergeschwindigkeiten bewertet: Je niedriger die Viskosität, umso besser ist das Dispergierergebnis. Als Anreibeharz wurden entweder Laropal A81 (Aldehydharz, BASF) oder Paraloid DM 55 (Acrylatharz, Rohm and Haas) verwendet. Die Angaben in den nachfolgenden Rezepturen sind in Gramm.

Zur Herstellung der Pigmentpasten werden die in den nachstehenden Tabellen angegebenen Rohstoffe nacheinander in einen 500 ml Dispermatentopf eingewogen, mit der gleichen Menge 2 mm Glasperlen versetzt und dann mit einer 40 mm Teflonscheibe bei 40° C dispergiert. Beim Titandioxid Kronos 2160 beträgt die Dispergierzeit 30 Minuten bei 8000 U/min, beim Eisenoxid Bayferrox 130M 40 Minuten bei 8000 U/min, und beim Ruß Spezialschwarz 4 60 Minuten bei 10.000 U/min.
Die dispergierten Pasten werden über ein Papiersieb (Maschenweite 80 µm) abgesiebt, und in Glasflaschen abgefüllt. Man erhält mit den erfindungsgemäßen Additionsverbindungen fließfähige Pigmentpasten mit sehr guten rheologischen Eigenschaften.

Die Viskositäten der Pigmentpasten wurden bei 20°C mit dem Rheolab MC 10 (Fa. Physica/Pacer) gemessen. Vor der eigentlichen Viskositätsmessung wurden die Pigmentpasten kurz bei 4500 s⁻¹ vorgeschert. Delta E der Weißabmischungen wurde gemäß DIN 5033 mit dem Gerät "TCS" der Firma Byk-Gardner ermittelt.

### Pastenrezepturen:

### (Mengenangaben in Gewichtsteilen)

| **A) Laropal A 81- Pasten** | | |
|---|---|---|
| | **A1** | **A2** |
| | 130 M | SS4 |
| Laropal A81 (65%ig in Xylol/PMA 1:1) | 17 | 28 |
| PMA | 1,4 | 14,2 |
| Xylol | 6,3 | 20,1 |
| Dispergiermittel nach Herstellungsbeispiel (40%ig)* | 15 | 17,7 |
| Aerosil 200 | 0,3 | - |
| Bayferrox 130 M | 60 | - |
| Spezialschwarz 4 | - | 20 |

| **B) Paraloid DM 55 - Paste** | |
|---|---|
| | **B1** |
| | **130 M** |
| Paraloid DM 55 (60%ig in Xylol/PMA 1:1) | 22 |
| PMA | 7,6 |
| Dispergiermittel nach Herstellungsbeispiel (40%ig)* | 15 |
| Aerosil 200 | 0,4 |
| Bayferrox 130 M | 60 |

| | |
|---|---|
| *: Die Produkte mit einem höheren Festkörpergehalt wurden mit PMA ebenfalls auf 40% verdünnt, um die Vergleichbarkeit zu gewährleiten. | |

### Ergebnisse:

| **Pastenviskosität in mPas bei D [s**^{**-1**}**]** | | | | |
|---|---|---|---|---|
| Pigmentpaste | Herstellungsbeispiel | D = 10s⁻¹ | D = 100s⁻¹ | D = 1000s⁻¹ |
| **A1** Bayferrox 130 M / Laropal A 81 | Beispiel 21 | 454 | 197 | 164 |
| | Beispiel 22* | 762 | 325 | 271 |
| | Beispiel 23 | 291 | 272 | 240 |
| **A2** Spezialschwarz 4 / Laropal A 81 | Beispiel 21 | 118 | 58 | 44 |
| | Beispiel 22* | 145 | 89 | 75 |
| | Beispiel 23 | 93 | 61 | 52 |
| **B1** Bayferrox 130 M / Paraloid DM 55 | Beispiel 21 | 969 | 889 | 985 |
| | Beispiel 22* | 2231 | 1734 | 1669 |
| | Beispiel 23 | 1768 | 1574 | 1488 |

| | | | | |
|---|---|---|---|---|
| *Vergleichsbeispiel (macht von Intermedio I18 Gebrauch) | | | | |

Die mit dem nicht erfindungsgemäßen Vergleichsbeispiel 22 hergestellten Pigmentpasten zeigen insbesondere im unteren Scherbereich, bei niedrigen Umdrehungszahlen, aufgrund ihrer Flokkulationsneigung die höchsten Viskositäten.

Diese Pigmentpasten wurden zusammen mit einer Weißpaste (Rezepturen siehe nachfolgende Tabelle) auf Basis des gleichen Anreibeharzes zur Weißabmischung von verschiedenen Klarlacken verwendet.

| **C) Weißpasten** | | |
|---|---|---|
| | **C1** | **C2** |
| | **A 81** | **DM55** |
| Laropal A81 (65%ig in Xylol/PMA 1:1) | 20,6 | |
| Paraloid DM 55 (60%ig in Xylol/PMA 1:1) | | 27 |
| PMA | 8,1 | 5,5 |
| Xylol | 8 | |
| Disperbyk 112 (Fa. BYK-Chemie) | 3 | 2,2 |
| Aerosil 200 | 0,3 | 0,3 |
| TiO2 Kronos 2160 | 60 | 65 |

| **D) Weißabmischungen** | | | |
|---|---|---|---|
| | **A 81 Pasten** | | **DM 55 Paste** |
| Klarlack | 18,7 | 19,6 | 19,4 |
| Weißpaste | 9,3 | 9,8 | 8,6 |
| 130M-Paste | 2 | - | 2 |
| Rußpaste | - | 0,6 | - |
| | 10 min rütteln | | |

Zur Beurteilung der Flokkulationsstabilität wurden Rubout-Tests durchgeführt. Hierzu gießt man den Lack auf eine etwa 80° geneigte Glasplatte auf, läßt bis kurz vor dem Antrocknen ablüften und reibt mit dem Finger etwa 1/3 der Lackfläche bis zur Farbkonstanz aus. Nach Aushärtung des Films wird die Farbstärke-Differenz sowohl der ausgeriebenen als auch der nicht-ausgeriebenen Fläche als DeltaE-Wert bestimmt. Je kleiner der DeltaE-Wert, umso besser sind die Pigmente gegen Flokkulation und Entmischungserscheinungen stabilisiert.

### Klarlacke :

| **E) Alkyd/Melamin Einbrennlack** **Alftalat AC 451 70%ig / Maprenal MF 800** | |
|---|---|
| Alftalat AC 451 70%ig | 63,5 |
| Maprenal MF 800, Melamin | 20,2 |
| Butanol | 2 |
| Solvent Naphta | 13,8 |
| Byk 310, (Fa. BYK-Chemie) | 0,2 |
| Byk 066, (Fa. BYK-Chemie) | 0,3 |
| mit Xylol auf 25 Sekunden einstellen, 20 min ablüften Einbrennen: 30 min 140°C | |

| **F) 2 K Lack Acryl/ Isocyanat** **Macrynal SM 510 / Desmodur N 3390** | | | | |
|---|---|---|---|---|
| **Klarlack** | | | **Härterlösung** | |
| Macrynal SM 510, (Acrylatharz) | 75 | | | |
| PMA | 5 | | | |
| Solvent Naphta | 5 | | | |
| Xylol | 6,4 | | | |
| Butylacetat | 8 | | Desmodur N 3390 (Polyisocyanat, Fa. Bayer) | 50 |
| Byk 306, (Fa. BYK-Chemie) | 0,1 | | Butylacetat | 35 |
| Byk 066, (Fa. BYK-Chemie) | 0,5 | | Xylol | 15 |
| Klarlack : Härterlösung 2 : 1 | | | | |

### Ergebnisse der Rub out Tests:

| | | E) Alkyd/Melamin | F) 2 K |
|---|---|---|---|
| **Pigmentpaste** | **Herstellungsbeispiel** | **Delta E** | **Delta E** |
| **A1** Bayferrox 130 M / Laropal A 81 | Beispiel 21 | 1,3 | 1,6 |
| | Beispiel 22* | 4,2 | 4,0 |
| | Beispiel 23 | 0,4 | 0,8 |
| **A2** Spezialschwarz 4 / Laropal A 81 | Beispiel 21 | 0,5 | 0,4 |
| | Beispiel 22* | 2,2 | 2,2 |
| | Beispiel 23 | 0,3 | 1,7 |
| **B1** Bayferrox 130 M / Paraloid DM 55 | Beispiel 21 | 1,8 | 1,7 |
| | Beispiel 22* | 3,6 | 2,3 |
| | Beispiel 23 | 0,2 | 0,4 |

| | | | |
|---|---|---|---|
| *Vergleichsbeispiel (macht von Intermedio 118 Gebrauch) | | | |

Die mit dem nicht erfindungsgemäßen Vergleichsbeispiel 22 hergestellten Weißabmischungen zeigen aufgrund ihrer Flokkulationsneigung das stärkste Ausschwimmen.

## Patentansprüche

1. Additionsverbindungen, **dadurch gekennzeichnet, daß** die Additionsverbindungen erhältlich sind durch die Umsetzung von
a) einem oder mehreren uretdiongruppenhaltigen Polyisocyanaten mit
b) einer oder mehreren Verbindungen der Formel (I)
Y-(XH)ₙ (I)
wobei
XH für eine gegenüber Isocyanaten reaktive Gruppe steht und
Y für eine nicht gegenüber Isocyanaten reaktive, monomere oder polymere Gruppe steht, die eine oder mehrere aliphatische, cycloaliphatische, araliphatische und/oder aromatische Gruppen umfaßt,
wobei Y eine zahlenmittlere Molmasse kleiner 20000 g/mol besitzt und
n für 1, 2 oder 3 steht und
wobei für mindestens 50 Mol-% der Verbindungen der Formel (I) gilt, daß n = 1 ist,
unter der Vorgabe, daß im wesentlichen alle freien Isocyanatgruppen der Komponente a) mit den Verbindungen der Formel (I) zu einem Uretdiongruppen enthaltendem Zwischenprodukt umgesetzt werden, wobei anschließend die Uretdiongruppen mit
c) einer oder mehreren Verbindungen der allgemeinen Formel (II)
Z-NHR (II)
zur Reaktion gebracht werden,
worin
R für Wasserstoff oder eine geradkettige oder verzweigte Alkylgruppe mit 1 bis 4 Kohlenstoffatomen steht und
Z einen aliphatischen, cycloaliphatischen und/oder aromatischen basischen Rest darstellt
und gegebenenfalls nach dieser Reaktion im Reaktionsprodukt gegebenenfalls noch vorhandene reaktive Aminogruppen mit gegenüber Aminogruppen
reaktiven Verbindungen umgesetzt werden;
sowie Salze oder Quaternisierungsprodukte der Additionsverbindungen.

2. Additionsverbindungen nach Anspruch 1, wobei Y gegebenenfalls die Heteroatome O, S und/oder N und/oder Ether-, Urethan-, Carbonat, Siloxan- und/oder Estergruppen enthält, und gegebenenfalls Wasserstoff gegen Halogen substituiert ist.

3. Additionsverbindungen nach Anspruch 1 oder 2, wobei Z eine oder mehrere der folgenden Bedeutungen hat:
A) eine aliphatische und/oder cycloaliphatische Gruppe mit mindestens einer tertiären Aminogruppe oder
B) eine heterocyclische Gruppe mit mindestens einem basischen Ringstickstoffatom, das kein Wasserstoffatom enthält, wobei die heterocyclische Gruppe über eine organische Kopplungsgruppe an die Gruppe NHR gebunden sein kann oder
C) Rest eines gegebenenfalls modifizierten Polyamins und/oder Polyimins .

4. Additionsverbindungen nach einem oder mehreren der Ansprüche 1 bis 3, wobei als Z-NHR Verbindungen aus der Gruppe "Diethylentriamin, Triethylentetramin, Tetraethylenpentamin, Pentaethylenhexamin, Hexaethylenheptamin, höhere lineare Kondensate der allgemeinen Formel NH₂-(C₂H₄NH)n-C₂H₄-NH₂ mit n >5, verzweigte Poly(C₂-C₄) alkylenamine, Poly(C₂ - C₄)alkylenimine mit tertiären Aminogruppen und einem zahlenmittleren Molekulargewicht bis zu 1000000 g/mol" oder Mischungen solcher Amine verwendet werden.

5. Additionsverbindungen nach einem oder mehreren der Ansprüche 1 bis 4, wobei es sich im Fall der verzweigten Poly(C₂-C₄)alkylenamine mit tertiären Aminogruppen um Aziridinpolymere (Polyethylenimine) handelt.

6. Additionsverbindungen nach einem oder mehreren der Ansprüche 1 bis 5, **dadurch gekennzeichnet, daß** ein Teil der vorliegenden freien reaktiven Aminogruppen mit Epoxiden, Carbonaten, Carbonsäuren, und/oder α, β-ungesättigten Verbindungen umgesetzt wird.

7. Additionsverbindungen nach einem oder mehreren der Ansprüche 1 bis 6, wobei als Verbindungen der Formel (I) hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind, eingesetzt werden.

8. Additionsverbindungen nach einem oder mehreren der Ansprüche 1 bis 7, **dadurch gekennzeichnet, daß** es sich bei den uretdiongruppenhaltigen Polyisocyanaten um cyclische Dimerisierungsprodukte von Diisocyanaten auf Basis Hexamethylendiisocyanat, Isophorondiisocyanat und/oder Toluylendiisocyanat handelt.

9. Verwendung einer der Additionsverbindungen aus einem oder mehreren der Ansprüche 1 bis 8 zur Herstellung von Pigmente und/oder Füllstoffe enthaltenden Pigmentkonzentraten, Lacken, Pasten und/oder Formmassen.

10. Verwendung einer der Additionsverbindungen aus einem oder mehreren der Ansprüche 1 bis 8 zur Herstellung eines Pigmentlacks, wobei ein Lackbindemittel und/oder Lösemittel, Pigmente und gegebenenfalls Füllstoffe, die Additionsverbindung und übliche Lackhilfsstoffe miteinander vermischt werden.

11. Verwendung einer Additionsverbindung aus einem oder mehreren der Ansprüche 1 bis 8 zur Herstellung eines pigmentierten Überzugs auf einem Substrat, wobei mit der Additionsverbindung ein Pigmentlack hergestellt wird, wobei der Pigmentlack auf das Substrat aufgebracht wird und wobei der auf das Substrat aufgebrachte Pigmentlack eingebrannt oder ausgehärtet oder vernetzt wird.

12. Verwendung einer der Additionsverbindungen aus einem oder mehreren der Ansprüche 1 bis 8 zur Herstellung von dispergierbaren pulverpartikel- und/oder faserpartikelförmigen Feststoffen, insbesondere von dispergierbaren Pigmenten oder Füllstoffen, wobei die Partikel mit der Additionsverbindung beschichtet sind.

13. Verfahren zur Herstellung von Additionsverbindungen, **dadurch gekennzeichnet, daß**
(A)
(a) ein oder mehrere uretdiongruppenhaltige Polyisocyanate mit
(b) einer oder mehreren Verbindungen der Formel (I)
Y-(XH)ₙ (I)
wobei
XH für eine gegenüber Isocyanaten reaktive Gruppe steht und Y für eine nicht gegenüber Isocyanaten reaktive, monomere oder polymere Gruppe steht, die eine oder mehrere aliphatische, cycloaliphatische, araliphatische und/oder aromatische Gruppen umfaßt,
wobei Y eine zahlenmittlere Molmasse kleiner 20000 g/mol besitzt und
n für 1, 2 oder 3 steht und
wobei für mindestens 50 Mol-% der Verbindungen der Formel (I) gilt, daß n = 1 ist,
unter der Vorgabe umgesetzt werden,
daß im wesentlichen alle freien Isocyanatgruppen der Komponente (a) mit den Verbindungen der Formel (I) zu einem Uretdiongruppen enthaltendem Zwischenprodukt umgesetzt werden,
(B) die Uretdiongruppen mit
(c) einer oder mehreren Verbindungen der allgemeinen Formel (II)
Z-NHR (II)
zur Reaktion gebracht werden,
worin
R für Wasserstoff oder eine geradkettige oder verzweigte Alkylgruppe mit 1 bis 4 Kohlenstoffatomen steht und
Z einen aliphatischen, cycloaliphatischen und/oder aromatischen basischen Rest darstellt und
(C) optional, die im Reaktionsprodukt gegebenenfalls noch vorhandenen reaktiven Aminogruppen mit gegenüber Aminogruppen reaktiven Verbindungen umgesetzt werden und
(D) optional die Additionsverbindungen mit organischen oder anorganischen Säuren und/oder Quaternisierungsagentien umgesetzt werden.

## Claims

1. Addition compounds, **characterized in that** the addition compounds are obtained through the conversion of
a) one or more polyisocyanates containing uretdione groups
b) one or more compounds of Formula (I)
Y-(XH)ₙ (I)
wherein
XH represents a group that reacts to isocyanates and
Y represents a monomer or polymer group that does not react to isocyanates, said Y group containing one or more aliphatic, cycloaliphatic, araliphatic and/or aromatic groups,
wherein Y has an average molar mass of less than 20000 g/mol and n represents 1, 2 or 3, and
wherein for at least 50 molar percent of the compounds of Formula (I), n = 1 with the prerequisite that essentially all free isocyanate groups of component a) are converted by compounds of Formula (I) to an intermediate product containing uretdione groups,
wherein the uretdione groups are thereupon caused to react with
c) one or more compounds of the general Formula (II)
Z-NHR (II)
wherein
R is hydrogen or a straight-chain or branched alkyl group with 1 to 4 carbon atoms and
Z represents an aliphatic, cycloaliphatic and/or aromatic basic radical and that any reactive amino groups still present in the reaction product after this reaction are converted by compounds that react to amino groups;
as well as salts or quaternization products of the addition compounds.

2. Addition compounds according to claim 1, wherein Y may contain the heteroatoms O, S and/or N and/or ether, urethane, carbonate, siloxane and/or ester groups, and wherein hydrogen may substitute for halogen.

3. Addition compounds according to claim 1 or 2, wherein Z has one or more of the following meanings:
A) an aliphatic and/or cycloaliphatic group with at least one tertiary amino group or
B) a heterocyclic group with at least one basic ring nitrogen atom that contains no hydrogen atom, wherein the heterocyclic group can be bound to the NHR group via an organic coupling group, or
C) a radical of an optionally modified polyamine and/or polyimine.

4. Addition compounds according to one or more of claims 1 to 3, wherein compounds from the group "diethylenetriamine, triethylenetetramine, tetraethylenepentamine, pentaethylenehexamine, hexaethyleneheptamine, higher linear condensates of the general formula NH₂-(C₂H₄NH)n-C₂H₄-NH₂ where n > 5, branched poly(C₂-C₄) alkyleneamines, poly(C₂ - C₄) alkyleneimines with tertiary amino groups and an average molecular weight of up to 1000000 g/mol" or mixtures of such amines are used as Z-NHR.

5. Addition compounds according to one or more of claims 1 to 4, wherein in the case of branched poly(C₂-C₄) alkyleneamines with tertiary amino groups, such compounds are aziridine polymers (polyethyleneimines).

6. Addition compounds according to one or more of claims 1 through 5, **characterized in that** a part of the available freely reacting amino groups are converted by epoxides, carbonates, carboxylic acids, and/or α,β-unsaturated compounds.

7. Addition compounds according to one or more of claims 1 to 6, wherein compounds of Formula (I) include hydroxyfunctional polyethers, hydroxyfunctional polyesters, hydroxyfunctional polyether-polyesters and/or aliphatic and/or cycloaliphatic alcohols with 2 to 30 carbon atoms, the hydrogen atoms of which may be partially replaced with halogen and/or aryl radicals.

8. Addition compounds according to one or more of claims 1 to 7, **characterized in that** the polyisocyanates containing uretdione groups are cyclic dimerisation products of diisocyanates based on hexamethylene diisocyanate, isophorone diisocyanate and/or tolylene diisocyanate.

9. Use of one of the addition compounds from one or more of claims 1 to 8 to produce pigments and/or pigment concentrates, paints, pastes and/or molding compounds that contain fillers.

10. Use of one of the addition compounds from one or more of claims 1 to 8 to produce a pigmented paint, wherein a paint binder and/or solvent, pigments and possibly fillers, the addition compound and common paint additives are mixed together.

11. Use of an addition compound from one or more of claims 1 to 8 to produce a pigmented coating on a substrate, wherein the addition compound is used to produce a pigmented paint that contains the addition compound, wherein the pigmented paint is applied to the substrate and the pigmented paint applied to the substrate is baked or cured or cross-linked.

12. Use of one of the addition compounds from one or more of claims 1 to 8 to produce dispersible powdered particulate and/or fibrous particulate solids, in particular dispersible pigments or fillers, wherein the particles are coated with the addition compound.

13. A method to produce addition compounds, **characterized in that**
(A)
(a) one or more polyisocyanates containing uretdione groups are converted with
(b) one or more compounds of Formula (I)
Y-(XH)ₙ (I)
wherein
XH represents a group that reacts to isocyanates and
Y represents a monomer or polymer group that does not react to isocyanates, said monomer or polymer group comprising one or more aliphatic, cycloaliphatic, araliphatic and/or aromatic groups,
wherein Y has an average molar mass of less than 20000 g/mol and n represents 1, 2 or 3, and
wherein for at least 50 molar percent of the compounds of Formula (I),
n=1,
with the prerequisite that
essentially all free isocyanate groups of component (a) are converted by compounds of Formula (I) to an intermediate product containing uretdione groups,
(B) the uretdione groups are caused to react with
c) one or more compounds of the general Formula (II)
Z-NHR (II)
wherein
R is hydrogen or a straight-chained or branched alkyl group with 1 to 4 carbon atoms and
Z represents an aliphatic, cycloaliphatic and/or aromatic basic radical
and
(C) optionally, any reactive amino groups still present in the reaction product are converted with compounds that react to amino groups and
(D) optionally, the addition compounds are converted with organic or inorganic acids and/or quaternizing agents.

## Revendications

1. Composés d'addition, **caractérisés en ce qu'**on peut les obtenir par la réaction
a) d'un ou de plusieurs polyisocyanates comportant des groupements uretdiones, avec
b) un ou plusieurs composés selon la formule (I)
Y-(XH)ₙ (I)
où
XH est un groupement réactif aux isocyanates, et
Y est un groupement non réactif aux isocyanates, monomère ou polymère, qui comprend un ou plusieurs groupements aliphatiques, cycloaliphatiques, araliphatiques et/ou aromatiques,
où Y possède une masse molaire moyenne en nombre inférieure à 20 000 g/mol, et où n correspond à 1, 2 ou 3, et
où pour au moins 50 % en moles des composés selon la formule (I), n = 1, à la condition que pour l'essentiel, tous les groupements isocyanates libres du composant a) aient réagi avec les composés selon la formule (I) pour donner un produit intermédiaire comprenant un groupement uretdione, où enfin on fait réagir les groupements uretdiones avec
c) un ou plusieurs composés de formule générale (II)
Z-NHR (II)
dans lesquels
R est de l'hydrogène ou un groupement alkyle linéaire ou ramifié présentant 1 à 4 atomes de carbone, et
Z représente un groupe fonctionnel basique aliphatique, cycloaliphatique et/ou aromatique,
et éventuellement après cette réaction, on fait réagir des groupements amines réactifs éventuellement encore présents dans le produit réactionnel avec des composés réactifs aux groupements amines ;
ainsi que des sels ou produits de quaternisation des composés d'addition.

2. Composés d'addition selon la revendication 1, dans lesquels Y contient éventuellement les hétéroatomes O, S et/ou N et/ou des groupements éthers, uréthanes, carbonates, siloxanes et/ou esters, et éventuellement a un ou plusieurs hydrogènes substitués par des halogènes.

3. Composés d'addition selon la revendication 1 ou 2, dans lesquels Z a une ou plusieurs des significations suivantes :
A) un groupement aliphatique et/ou cycloaliphatique présentant au moins un groupement amine tertiaire, ou
B) un groupement hétérocyclique présentant au moins un atome d'azote intracyclique basique qui ne comprend aucun atome d'hydrogène, où le groupement hétérocyclique peut être lié par un groupement organique de couplage au groupement NHR, ou
C) un groupe fonctionnel polyamine et/ou polyimine éventuellement modifié.

4. Composés d'addition selon une ou plusieurs des revendications 1 à 3, dans lesquels on utilise comme composés Z-NHR des composés du groupe diéthylène triamine, triéthylène tetramine, tetraéthylène pentamine, pentaéthylène hexamine, hexaéthylène heptamine, des condensats linéaires supérieurs de formule générale NH₂-(C₂H₄NH)ₙ-C₂H₄-NH₂ avec n > 5, des poly-(C₂-C₄)-alkylènamines ramifiés, des poly-(C₂ - C₄)-alkylènimines avec des groupements amines tertiaires et une masse moléculaire moyenne en nombre jusqu'à 1 000 000 g/mol, ou des mélanges de telles amines.

5. Composés d'addition selon une ou plusieurs des revendications 1 à 4, dans lesquels dans le cas des poly-(C₂-C₄)-alkylènamines ramifiés avec groupements amines tertiaires, on a affaire à des polymères d'aziridine (polyéthylènimine).

6. Composés d'addition selon une ou plusieurs des revendications 1 à 5, **caractérisés en ce qu'**on fait réagir une partie des groupements amines réactifs libres présents avec des époxides, des carbonates, des acides carboxyliques et/ou des composés α,β-insaturés.

7. Composés d'addition selon une ou plusieurs des revendications 1 à 6, dans lesquels on utilise comme composés selon la formule (I) des polyéthers hydroxyfonctionnels, des polyesters hydroxyfonctionnels, des polyéthers-polyesters hydroxyfonctionnels et/ou des alcools aliphatiques et/ou cycloaliphatiques présentant 2 à 30 atomes de carbone, dont les atomes d'hydrogène sont éventuellement remplacés en partie par des halogènes et/ou des groupes fonctionnels aryle.

8. Composés d'addition selon une ou plusieurs des revendications 1 à 7, **caractérisés en ce que** les polyisocyanates comprenant des groupements uretdiones sont des produits cycliques de dimérisation de diisocyanates sur la base de l'hexaméthylèndiisocyanate, de l'isophorondiisocyanate et/ou du toluylèndiisocyanate.

9. Utilisation d'un des composés d'addition selon une ou plusieurs des revendications 1 à 8 pour la fabrication de concentrés de pigments, de laques, de pâtes et/ou de matériaux de moulage comportant des pigments et/ou des charges.

10. Utilisation d'un des composés d'addition selon une ou plusieurs des revendications 1 à 8 pour la fabrication d'une laque à pigments, dans laquelle on mélange ensemble un liant pour laque et/ou des solvants, des pigments et éventuellement des charges, le composé d'addition et des additifs habituels pour laques.

11. Utilisation d'un composé d'addition selon une ou plusieurs des revendications 1 à 8 pour la fabrication d'un revêtement pigmenté sur un substrat, dans laquelle on fabrique avec le composé d'addition une laque à pigments, on applique la laque à pigments sur le substrat et la laque à pigments appliquée sur le substrat est cuite, durcie ou réticulée.

12. Utilisation d'un des composés d'addition selon une ou plusieurs des revendications 1 à 8 pour la fabrication de solides dispersables en particules pulvérulentes et/ou fibreuses, en particulier de pigments ou de charges dispersables, dans laquelle les particules sont recouvertes par le composé d'addition.

13. Procédé de fabrication de composés d'addition, **caractérisé en ce que** :
(A)
(a) on fait réagir un ou plusieurs polyisocyanates comprenant des groupements uretdiones avec
(b) un ou plusieurs composés selon la formule (I)
Y-(XH)ₙ (I)
où
XH est un groupement réactif aux isocyanates, et
Y est un groupement non réactif aux isocyanates, monomère ou polymère, qui comprend un ou plusieurs groupements aliphatiques, cycloaliphatiques, araliphatiques et/ou aromatiques,
où Y possède une masse molaire moyenne en nombre inférieure à 20 000 g/mol, et où n correspond à 1, 2 ou 3, et
où, pour au moins 50 % en moles des composés selon la formule (I), n = 1,
à la condition que, pour l'essentiel, tous les groupements isocyanates libres du composant (a) aient réagi avec les composés selon la formule (I) pour donner un produit intermédiaire comprenant un groupement uretdione,
(B) on fait réagir les groupements uretdiones avec
(c) un ou plusieurs composés selon la formule générale (II)
Z-NHR (II)
dans lesquels
R est de l'hydrogène ou un groupement alkyle linéaire ou ramifié présentant 1 à 4 atomes de carbone et
Z représente un groupe fonctionnel basique aliphatique, cycloaliphatique et/ou aromatique, et
(C) facultativement, on fait réagir les groupements amines réactifs éventuellement encore présents dans le produit réactionnel avec des composés réactifs aux groupements amines, et
(D) facultativement, on fait réagir les composés d'addition avec des acides organiques ou inorganiques et/ou des agents de quaternisation.
